# EUROPÄISCHE PATENTSCHRIFT

(11) **EP 2 393 858 B1**
(45) Veröffentlichungstag und Bekanntmachung des Hinweises auf die Patenterteilung: **02.12.2015**
(21) Anmeldenummer: 10702992.8
(22) Anmeldetag: 14.01.2010
(51) Int. Cl.: C08G 18/08, C08G 18/70, C08G 18/78, C08G 18/79, C08G 18/80, C09D 175/04, B05D 7/00, B05D 7/16, C09D 5/08

(54) **BESCHICHTUNGSMITTEL FÜR KORROSIONSSTABILE LACKIERUNGEN**
COATING AGENT FOR CORROSION-STABLE PAINTS
PRODUIT DE REVÊTEMENT POUR PEINTURES RÉSISTANTES À LA CORROSION

(30) Priorität: 05.02.2009 DE 102009007624
(43) Veröffentlichungstag der Anmeldung: 14.12.2011
(73) Patentinhaber: BASF Coatings GmbH, 48165 Münster (DE)
(72) Erfinder: RICHERT, Michael, 48282 Emsdetten (DE); DUSCHEK, Wolfgang, 48165 Münster (DE); DORNBUSCH, Michael, 40591 Düsseldorf (DE)
(74) Vertreter: Leifert & Steffan
(86) Internationale Anmeldenummer: PCT/EP2010/000149
(87) Internationale Veröffentlichungsnummer: WO 2010/089018

(56) Entgegenhaltungen:
- DE-A1- 4 438 504
- DE-A1- 19 612 899

## Beschreibung

### Gebiet der Erfindung

Die vorliegende Erfindung betrifft Beschichtungsmittel für korrosionsstabile Lackierungen, insbesondere für farb- und/oder effektgebende Mehrschichtlackierungen.

### Stand der Technik

Moderne Kraftfahrzeuge weisen gewöhnlich farb- und/oder effektgebende Mehrschichtlackierungen auf. In der Regel umfassen diese Mehrschichtlackierungen eine Elektrotauchlackierung, eine Füllerlackierung, Steinschlagschutzgrundierung oder Funktionsschicht, eine farb- und/oder effektgebende Basislackierung und eine Klarlackierung. Die Mehrschichtlackierungen werden vorzugsweise mit Hilfe sogenannter Naß-in-naß-Verfahren hergestellt, bei denen man auf eine getrocknete, nicht gehärtete Basislackschicht eine Klarlackschicht appliziert, wonach man zumindest Basislackschicht und Klarlackschicht gemeinsam thermisch härtet. In dieses Verfahren kann auch die Herstellung der Elektrotauchlackierung und der Füllerlackierung, Steinschtagschutzgrundierung oder Funktionsschicht einbezogen werden.

Dabei sind die Füllerlackierungen, Steinschlagschutzgrundierungen oder Funktionsschichten entscheidend für so wesentliche technologische Eigenschaften wie Schlagfestigkeit und Glätte und Verlauf der Gesamtlackierung. An die Qualität der Füllerlackierungen, Steinschlagschutzgrundierungen oder Funktionsschichten werden deshalb besonders hohe Anforderungen gestellt. Sie müssen auch in einfacher und hervorragend reproduzierbarer Weise herstellbar sein.

Die Automobilindustrie ist weiterhin bestrebt, die Trockenschichtdicken der Füllerlackierungen, Steinschlagschutzgrundierungen oder Funktionsschichten zu verringern, um die Rohstoff- und Energiekosten zu senken, ohne dass es hierbei zu einer Verschlechterung des anwendungstechnisehen Eigenschaftsprofils der Mehrschichtlackierungen, insbesondere zu einer Verschlechterung der UV-Stabilität, kommt.

Zur Lösung dieser Probleme haben die aus den Patentanmeldungen DE 196 12 899 A1 DE 44 38 504 A1, WO 2005/021168 A1 und WO 2006/062666 A1 bekannten Verfahren wichtige Beiträge geleistet. Bei den Verfahren wird ein Substrat mit einem Elektrotauchlack beschichtet. Die resultierende Elektrotauchlackschicht wird eingebrannt. Die Elektrotauchlackschicht wird mit einem ersten, physikalisch oder thermisch härtbaren, wäßrigen Basislack beschichtet. Die resultierende erste Basislackschicht wird, ohne sie zuvor vollständig zu härten, mit einem zweiten, thermisch härtbaren, wäßrigen Basislack beschichtet. Die resultierende zweite Basislackschicht wird, ohne sie zuvor vollständig zu härten, mit einem Klarlack beschichtet, wodurch eine Klarlackschicht resultiert. Anschließend werden die erste und zweite Basislackschicht und die Klarlackschicht gemeinsam eingebrannt. Der erste, physikalisch oder thermisch härtbare, wäßrige Basislack enthält als Bindemittel mindestens ein wasserverdünnbares Polyurethanharz, insbesondere acrylierte Polyurethane. Der erste Basislack kann unter anderem Titandioxid als Pigment, Talkum als Füllstoff und UV-Absorber enthalten. Der erste Basislack liefert eine erste Basislackierung oder Funktionsschicht, die bei Trockenschichtdicken < 35 µm, vorzugsweise von etwa 15 µm, die herkömmlichen Füllerlackierungen, Steinschlagschutzgrundierungen oder Funktionsschichten ohne Verlust von wesentlichen technologischen Eigenschaften der Mehrschichtlackierungen zu ersetzen vermag. Weiterhin gewährleistet der Einsatz von UV-Absorbern, insbesondere UV-absorbierenden Pigmenten, wie in WO 2005/021168 A1 und WO 2006/062666 A1 beschrieben, daß die UV-Stabilität der betreffenden Mehrschichtlackierungen gewährleistet ist.

Werden die vorbeschriebenen Mehrschichtlackierungen einer Belastung durch Steinschlag ausgesetzt, so treten trotz deren hoher Steinschlagbeständigkeit Abplatzungen des gesamten Schichtverbunds auf, bei welchem das blanke metallische Substrat freigetegt und einem Angriff durch Korrosion ausgesetzt wird. Diese Korrosion äußert sich in Bildung von Blistern, das heißt blasenartigen Aufwerfungen der Mehrschichtlackierung, begleitet durch eine fortschreitende Vergrößerung der durch den Steinschlag freigelegten Fläche, welche durch die korrosive Unterwanderung der Mehrschichtlackierung ausgehend von der Korrosion am blanken metallischen Substrat bedingt sind.

Es besteht daher das Bedürfnis, Beschichtungsmittel für Mehrschichtlackierungen zu entwickeln, bei welchen das durch Schlagbeanspruchung freigelegte blanke metallische Substrat durch Korrosionsschutzmittel geschützt werden, welche bereits im Schichtverbund vorhanden sind. Dabei müssen die Korrosionsschutzmittel eine einerseits ausreichend hohe Mobilität aufweisen, um zum freigelegten metallischen Substrat zu gelangen, andererseits gut im Schichtverbund eingebunden sein, um ein unnötiges Ausbluten in Feuchtezyklen durch osmotischen Druck zu verhindern. Die in der Elektrotauchlackschicht üblicherweise verwendeten Korrosionsschutzmittel sind pigmentförmig und werden als Pigmentpasten zugegeben. Niedermolekulare Korrosionsschutzmittel können nur dann beim Abscheideprozeß an die Grenzfläche zwischen Substrat und Lack gelangen und somit abgeschieden werden, wenn diese eine positive Ladung tragen, wobei solche Korrosionschutzmittel die Eigenschaften des gesamten Lack-Beckens und somit der Lackierung meistens beeinträchtigen. Pigmentförmige Korrosionsschutzmittel weisen in der Regel aufgrund ihrer Teilchengröße gar keine oder eine nur sehr geringe Mobilität auf.

In DE 103 00 751 A1 werden Beschichtungsmittel beschrieben, welche bis zu 5 Gew.-%, bezogen auf das Beschichtungsmittel, Wasser und/oder Lösemittel enthalten können, die erfindungsgemäß für die direkte Beschichtung von Metallen, insbesondere für die Beschichtung von Metallbändern, bestimmt sind, die aber auch über einer Elektrotauchlackschicht aufgebracht sein können. Die Beschichtungsmittel werden mit aktinischer Strahlung gehärtet und enthalten niedermolekulare organische Korrosionsschutzmittel und vorzugsweise weitere anorganische Korrosionsschutzpigmente. Neben den Korrosionsschutzmitteln und/oder -pigmenten können weiterhin Farbpigmente im Beschichtungsmittel anwesend sein. Eine Mehrschichtlackierung in der Automobilserienlackierung, wie einleitend dargestellt, wird nicht beschrieben.

Setzt man zur Beschichtung einer Elektrotauchlackschicht, insbesondere über Eiektrotauchlackschichten bei der Automobilserienlackierung, ein Beschichtungsmittel ein, welches mit aktinischer Strahlung gehärtet wird, so wird die Elektrotauchlackschicht durch Photodegradation empfindlich geschädigt, was zu deutlich verminderter Haftung der Elektrotauchlackschicht und damit zu erhöhter korrosiver Unterwanderung der Schicht in Nachbarschaft zum blanken metallischen Substrat führt, wobei dies durch die vorliegende Erfindung gerade vermieden werden soll. Weiterhin sind die Applikationseigenschaften der in DE 103 00 751 A1 beschriebenen Beschichtungsmittel nur mit hohem Aufwand auf die Applikätionsbedingungen einstellbar, insbesondere hinsichtlich der Rheologie, wie sie für die vorbeschriebenen Mehrschichtlackierungen in der Automobilserienlackierung notwendig sind.

### Die Aufgabe der Erfindung

Aufgabe der vorliegenden Erfindung war es, Beschichtungsmittel für korrosionsstabile Beschichtungen, insbesondere für farb- und/oder effektgebender Mehrschichtlackierungen auf vorzugsweise metallischen Substraten bereitzustellen, umfassend, in dieser Reihenfolge übereinander liegend,
(1) mindestens eine erste Basistackierung aus Basislack (A),
(2) bevorzugt mindestens eine zweite Basislackierung aus Basislack (B) und
(3) mindestens eine transparente Lackierung aus Klarlack (C),
vorzugsweise herstellbar durch sukzessive Applikation mindestens eines thermisch härtbaren, vorzugsweise wäßrigen Basislacks (A), bevorzugt mindestens eines thermisch härtbaren, vorzugsweise wäßrigen Basislacks (B) und mindestens eines Klarlacks (C) auf ein ungrundiertes Substrat oder vorzugsweise auf ein mit mindestens einer nicht oder nur partiell gehärteten Grundierung (G) oder besonders bevorzugt auf ein mit mindestens einer vollständig gehärteten Grundierung (G) zumindest teilweise beschichtetes Substrat, die die Nachteile des Standes der Technik nicht mehr aufweist. Insbesondere sollte die erfindungsgemäße Mehrschichtlackierung eine gute Haftung zu den benachbarten Lackschichten sowie im Besonderen eine deutlich reduzierte Korrosion nach Schlagbelastung, die durch korrosive Unterwanderung des Mehrschichtverbunds ausgehend von freigelegtem blanken metallischen Substrat ausgelöst wird, aufweisen. Desweiteren sollte die Verbesserung der Korrosionsbeständigkeit insbesondere mit im Basislack (A) gut einarbeitbaren Komponenten erreicht werden. Weiterhin soll der physikalisch oder thermisch härtbare, vorzugsweise wäßrige Basislack (A) in einfacher Weise auf der Basis handelsüblicher, vorzugsweise wäßriger Basislacke bereitgestellt werden können und erste Basislackierungen liefern, die selbst in einer Schichtdicke von etwa 15 µm herkömmliche Füllerlackierungen, Steinschlagschutzgrundierungen oder Funktionsschichten in vollem Umfang ersetzen können, ohne dass die anwendungstechnischen Eigenschaften der Mehrschichtlackierungen, insbesondere der Steinschlagschutz und die UV-Stabilität auch nach Langzeitexposition, nachteilig beeinflusst werden. Dabei sollte das neue Verfahren in bereits vorhandenen Anlagen für die Applikation von Basislacken durch elektrostatische Spritzapplikation und pneumatische Applikation durchgeführt werden können, ohne daß hierfür Umbauten notwendig werden.

### Die erfindungsgemäße Lösung

Demgemäß wurden Beschichtungsmittel für Mehrschichtlackierungen enthaltend
(a.1) mindestens ein Bindemittel mit funktionellen Gruppen (Gr),
(a.2) mindestens ein Pigment und
(a.3) mindestens eine korrosionsinhibierende Komponente, welche einen Grundkörper (GK),
mindestens eine an (GK) kovalent gebundene funktionelle Gruppe (Gr'), die bei der thermischen Härtung der Mehrschichtlackierung mit den funktionellen Gruppen (Gr) des Bindemittels (a.1) reagiert, sowie
mindestens einen von der funktionellen Gruppe (Gr') verschiedenen, an (GK) kovalent gebundenen ein- und/oder mehrzähnigen potentiell anionischen Liganden (L), welcher bei der thermischen Härtung der Mehrschichtlackierung seine Eigenschaft als Chelatbildner nicht verliert und welcher ausgewählt ist aus der Gruppe der
- Organophosphoverbindungen,
- Organoschwefelverbindungen,
- acylierten Harnstoffe und Thioharnstoffe,
- Di- und/oder Polyamine,
- Chinoline, Choline und/oder Benzimidazole,
- Hydroxyverbindungen, die weitere Iminogruppen aufweisen,
- Carbonylverbindungen, die weitere Carbonyl-, Carbonsäure-, Thiocarbonyl- und/oder Iminogruppen aufweisen,
- Carbene und/oder Acetylenverbindungen,
dadurch gekennzeichnet, dass der Grundkörper (GK) Uretdion- und/oder Isocyanuratgruppen und/oder Allophanatgruppen aufweist,
gefunden, die sehr gute korrosionsinhibierende Eigenschaften aufweisen.

Weiterhin wurde gefunden, dass die erfindungsgemäßen Beschichtungsmittel insbesondere als Basislack (A) für eine Mehrschichtlackierung auf Substraten geeignet sind, umfassend, in dieser Reihenfolge übereinander liegend,
(1) mindestens eine erste Basislackierung aus dem erfindungsgemäßen Beschichtungsmittel als Basislack (A),
(2) mindestens eine zweite farb- und/oder effektgebende Basislackierung aus Basislack (B) und
(3) mindestens eine transparente Lackierung aus Klarlack (C),
vorzugsweise herstellbar durch sukzessive Applikation des erfindungsgemäßen Beschichtungsmittels als Basislack (A), mindestens eines thermisch härtbaren, vorzugsweise wäßrigen Basislacks (B) und mindestens eines Klarlacks (C) auf ein ungrundiertes Substrat und/oder auf ein mit mindestens einer nicht oder nur partiell gehärteten Grundierung (G) beschichtetes Substrat und/oder auf ein mit mindestens einer vollständig gehärteten Grundierung (G) zumindest teilweise beschichtetes Substrat, wobei die gemeinsame Härtung der resultierenden Naßschichten aus den Basislacken (A) und bevorzugt (B) sowie des Klarlacks (C) oder aus den Basislacken (A) und bevorzugt (B) sowie des Klarlacks (C) und gegebenenfalls der nicht oder nur partiell gehärteten Grundierung (G) bevorzugt ist.

Im Hinblick auf den Stand der Technik war es für den Fachmann nicht vorhersehbar, daß die Aufgaben, die der vorliegenden Erfindung zugrunde- lagen, die Reduktion der Korrosion nach Schlagbelastung bei gleichzeitige güter Einarbeitbarkeit der Komponente (a.3) in das erfindungsgemäße Beschichtungsmittel, mit Hilfe der erfindungsgemäßen Mehrschichtlackierung gelöst werden konnte. Das erfindungsgemäße Beschichtungsmittel lieferte erste Basislackierungen (A), die selbst in einer Schichtdicke von etwa 15 µm herkömmliche Füllerlackierungen, Steinschlagschutzgrundierungen oder Funktionsschichten in vollem Umfang ersetzen konnten, ohne daß die anwendungstechnischen Eigenschaften der Mehrschichtlackierungen, wie insbesondere die gute Haftung zu den benachbarten Lackschichten sowie der Steinschlagschutz und die UV-Stabilität auch nach Langzeitexposition, nachteilig beeinflusst wurden. Dabei konnte das erfindungsgemäße Beschichtungsmittel in bereits vorhandenen Anlagen für die Applikation von Basislacken durch elektrostatische Spritzapplikation und pneumatische Spritzapplikation durchgeführt werden, ohne daß hierfür Umbauten notwendig wurden.

### Ausführliche Beschreibung des erfindungsgemäßen Beschichtungsmittels und der Mehrschichtlackierung

### Das Bindemittel (a.1)

Das erfindungsgemäße Beschichtungsmittel, das vorzugsweise thermisch härtbar ist und besonders bevorzugt als wäßriger Basislack (A) für die nachstehend beschriebene Mehrschichtlackierung eingesetzt wird, enthält als wesentlichen Bestandteil mindestens ein Bindemittel (a.1) mit funktionellen Gruppen (Gr) auf, die bevorzugt mit den funktionellen Gruppen (Gr') der Komponente (a.3) unter Ausbildung kovalenter Bindungen reagieren. Die bevorzugte funktionelle Gruppe (Gr) ist eine Hydroxylgruppe (Gr). Dabei können prinzipiell alle thermisch härtbaren Bindemittel mit solchen Merkmalen eingesetzt werden, die für den Einsatz in organischen und/oder wäßrigen Basislacken bekannt sind.

Geeignete Bindemittel (a.1) für den Einsatz in den erfindungsgemäßen Beschichtungsmitteln sind beispielsweise in den Patentanmeldungen D E 44 38 504 A1, EP 0 593 454 B1, OE 199 48 004 A1, EP 0 787 159 B1 und WO 2005/021168 A1 beschrieben. Bevorzugt werden die in EP 0 593 454 B1, EP 0 787 159 B1, DE 199 48 004 A1 und/oder WO 2005/021168 A1 beschriebenen Bindemittel eingesetzt, wobei neben diesen Bindemitteln noch weitere Bindemittel eingesetzt werden können.

Bevorzugt enthalten die Bindemittel (a.1) Kombinationen aus mindestens 2 Komponenten ausgewählt aus der Gruppe der wasserverdünnbaren Polyesterharze (a.1.1), der wasserverdünnbaren Polyurethanharze (a.1.2) und/oder wasserverdünnbaren Polyacrylatharze (a.1.3).

Besonders bevorzugt werden als Komponente (a.1:1) die in EP 0 593 454 B1, Seite 8, Zeile 3 bis Seite 9, Zeile 42 beschriebenen wasserverdünnbaren Polyesterharze eingesetzt. Solche Polyesterharze (a.1.1) sind erhältlich, indem (a.1.1.1) Polyole oder ein Gemisch von Polyolen und (a.1.1.2) Polycarbonsäuren oder Polycarbonsäureanhydride oder ein Gemisch aus Polycarbonsäure und/oder Polycarbonsäureanhydriden zu einem Polyesterharz mit einer Säurezahl nach DIN EN ISO 3682 von 20 bis 70, vorzugsweise 25 bis 55 mg KOH/g nichtflüchtigen Anteil und einer Hydroxylzahl nach DIN EN ISO 4629 von 30 bis 200, vorzugsweise 45 bis 100 mg KOH/g nichtflüchtigen Anteil umgesetzt werden.

Die für die Herstellung der wasserverdünnbaren Polyesterharze (a.1.1) bevorzugt eingesetzten Komponenten (a.1.1.1) sind in EP 0 593 454 B1 auf Seite 8, Zeilen 26 bis 51, die bevorzugt eingesetzten Komponenten (a.1.1.2) in EP 0 593 454 B1 auf Seite 8, Zeile 52, bis Seite 9, Zeile 32 beschrieben Die Herstellung der Polyesterharze (a.1.1) und deren Neutralisation sind in EP 0 593 454 B1 auf Seite 9, Zeilen 33 bis 42, beschrieben.

Besonders bevorzugt werden als Komponente (a.1.2) die in EP 0 593 454 B1, Seite 5, Zeile 42 bis Seite 8, Zeile 2 beschriebenen wasserverdünnbaren Polyurethanharze eingesetzt. Solche Polyurethanharze (a.1.2) sind erhältlich, indem (a.1.2.1) ein Polyester- und/oder Polyetherpolyol oder ein Gemisch aus solchen Polyester- und/oder Polyetherpolyolen, (a.1.2.2) ein Polyisocyanat oder ein Gemisch aus Polyisocyanaten, (a.1.2.3) eine Verbindung, die mindestens eine gegenüber Isocyanatgruppen reaktive Gruppe und mindestens eine zur Anionenbildung befähigte Gruppe im Molekül aufweist oder ein Gemisch aus solchen Verbindungen (a.1.2.4) eine Hydroxyl- und/oder Aminogruppen enthaltende organische Verbindung mit einem gewichtsmittleren Molekulargewicht Mw von 40 bis 600 Dalton (bestimmbar mittels Gelpermeationschromatographie nach den Normen DIN 55672-1 bis -3) oder ein Gemisch aus solchen Verbindungen und (a.1.2.5) gegebenenfalls eine Verbindung, die mindestens eine gegenüber Isocyanatgruppen reaktive Gruppe und mindestens eine Polyoxyalkylengruppe im Molekül aufweist oder ein Gemisch aus solchen Verbindungen miteinander umgesetzt werden und das entstandene Reaktionsprodukt wenigstens teilweise neutralisiert wird. Das solchermaßen hergestellte Polyurethanharz weist bevorzugt eine Säurezahl nach DIN EN ISO 3682 von 10 bis 60 mg KOH/g nichtflüchtigen Anteil und eine Hydroxylzahl nach DIN EN ISO 4629 von 5 bis 200, vorzugsweise 10 bis 150 mg KOH/g nichtflüchtigen Anteil auf.

Die für die Herstellung der wasserverdünnbaren Polyurethanharze (a.1.2) bevorzugt eingesetzten Komponenten (a.1.2.1) sind in EP 0 593 454 81 auf Seite 6, Zeilen 6 bis 42, die bevorzugt eingesetzten Komponenten (a.1.2.2) in EP 0 593 454 81 auf Seite 6, Zeile 43, bis Seite 7, Zeile 13, wobei ganz besonders bevorzugt Polyisocyanate auf Basis Isophorondiisocyanat und Tetramethylxyloldiisocyanat eingesetzt werden, die bevorzugt eingesetzten Komponenten (a.1.2.3) in EP 0 593 454 81 auf Seite 7, Zeilen 14 bis 30, die bevorzugt eingesetzten Komponenten (a.1.2.4) in EP 0 593 454 81 auf Seite 7, Zeilen 31 bis 53, und die bevorzugt eingesetzten Komponenten (a.1.2.5) in EP 0 593 454 81 auf Seite 7, Zeile 54 bis 58, beschrieben. Die Herstellung der Polyurethanharze (a.1.1) und deren Neutralisation sind in EP 0 593 454 81 auf Seite 7, Zeile 59, bis Seite 8, Zeile 2, beschrieben.

Als Komponente (a.1.3) können wasserverdünnbare Polyacrylatharze eingesetzt werden, wie sie beispielweise in EP 0 593 454 B1 beschrieben werden. Bevorzugt werden als Komponenten (a.1.3) wasserverdünnbare Polyacrylatharze, die in Gegenwart von Polyurethan-Präpolymeren (a.1.3.1) hergestellt werden, die gegebenenfalls Einheiten mit polymerisierbaren Doppelbindungen aufweisen.

In einer bevorzugten Ausführungsform der Erfindung werden wasserverdünnbare polyurethanmodifizierte Polyacrylate (a.1.3) gemäßder EP 0 787 159 B1 eingesetzt.

Solche wasserverdünnbaren polyurethanmodifizierten Polyacrylate (a.1.3) sind erhältlich, indem in einer ersten Stufe in Gegenwart einer Lösung eines Polyurethan-Präpolymeren (a.1.3.1), welches vorzugsweise keine polymerisierbaren Doppelbindungen aufweist, ein Gemisch aus (a.1.3.a.1) einem im wesentlich carboxylgruppenfreien (Meth)acrylsäureester oder einem Gemisch aus (Meth)acrylsäureestern, (a.1.3.a.2) einem ethylenisch ungesättigten Monomeren, das mindestens eine Hydroxylgruppe pro Molekül aufweist und im wesentlichen carboxylgruppenfrei ist oder einem Gemisch aus solchen Monomeren und (a.1.3.a.3) einem im wesentlichen carboxylgruppenfreien von (a.1.3.a.1) und (a.1.3.a.2) verschiedenen Monomeren oder einem Gemisch aus solchen Monomeren polymerisiert wird wobei das Potyurethan-Präpotymere (a.1.3.1. kein vernetztes Polyurethanharz ist, wobei anschließend in einer zweiten Stufe nach Zugabe eines Gemischs aus (a.1.3.b.1) einem mindestens eine Carboxylgruppe pro Molekül tragenden ethylenisch ungesättigten Monomeren oder einem Gemisch aus solchen Monomeren und (a.1.3.b.2) einem im wesentlichen carboxylgruppenfreien ethylenisch ungesättigten Monomeren oder einem Gemisch aus solchen Monomeren, weiterpolymerisiert wird nachdem mindestens 80 Gew.-% der in der ersten Stufe zugegebenen Monomeren umgesetzt worden sind, und in einer abschließenden Stufe nach Beendigung der Polymerisation das polyurethanmodifizierte Polyacrylat (a.1.3) neutralisiert wird und anschließend in Wasser dispergiert wird.

Die monomeren Komponenten (a.1.3.a.1), (a.1.3.a.2), (a.1.3.a.3), (a.1.3.b.1) und (a.1.3.b.2) werden in Art und Menge so ausgewählt, daß das aus den vorgenannten Komponenten erhaltene Polyacrylatharz eine Säurezahl nach DIN EN ISO 3682 von 20 bis 100 mg KOH/g nichtflüchtigen Anteil und eine Hydroxylzahl nach DIN EN ISO 4629 von 5 bis 200, vorzugsweise 10 bis 150 mg KOH/g nichtflüchtigen Anteil aufweist. Die bevorzugten Gewichtsanteile der vorgenannten Komponenten sind in EP 0 787 159 B1 auf Seite 3, Zeilen 4 bis 6, beschrieben.

Die für die Herstellung der wasserverdünnbaren polyurethanmodifizierten Polyacrylatharze (a.1.3) bevorzugt eingesetzten Komponenten (a.1.3.1) sind in EP 0 787 159 B1 auf Seite 3, Zeile 38, bis Seite 6, Zeile 13, die bevorzugt eingesetzten Komponenten (a.1.3.a.1) in EP 0 787 159 B1 auf Seite 3, Zeilen 13 bis 20, die bevorzugt eingesetzten Komponenten (a.1..3.a.2) in EP 0 787 159 B1 auf Seite 3, Zeilen 21 bis 33, die bevorzugt eingesetzten Komponenten (a.1.3.a.3) in EP 0 787 159 B1 auf Seite 3, Zeilen 34 bis 37, die bevorzugt eingesetzten Komponenten (a.1.3.b.1) in EP 0 787 159 B1 auf Seite 6, Zeilen 33 bis 39, und die bevorzugt eingesetzten Komponenten (a.1.3.b.2) in EP 0 787 159 B1 auf Seite 6, Zeilen 40 bis 42 beschrieben.

In einer weiteren Ausführungsform der Erfindung werden wasserverdünnbare polyurethanmodifizierte Polyacrylate (a.1.3), die in Gegenwart von Polyurethan-Präpolymeren (a.1.3.1) hergestellt werden, die Einheiten mit polymerisierbaren Doppelbindungen aufweisen, eingesetzt. Solche Pfropfmischpolymerisate und deren Herstellung sind beispielsweise aus EP 0 608 021 A1, DE 196 45 761 A1, DE 197 22 862 A1, WO 98/54266 Al, EP 0 522 419 A1, EP 0 522 420 A2 und DE 100 39 262 A1 bekannt. Dabei werden vorzugsweise als wasserverdünnbare polyurethanmodifizierte Polyacrylate (a.1.3) auf Basis von Pfropfmischpolymerisaten solche eingesetzt, wie sie in DE 199 48 004 A1 beschrieben sind. Dabei wird die Polyurethanpräpolymere -Komponente (a.1.3.1) hergestellt, indem man
(1) mindestens ein Polyurethanpräpolymer, das mindestens eine freie Isocyanatgruppe enthält, mit
(2) mindestens einem Addukt , das erhältlich ist, indem man mindestens ein Ethenylarylenmonoisocyanat und mindestens eine Verbindung, enthaltend mindestens zwei isocyanatreaktive funktionelle Gruppen, zur Reaktion bringt,
so miteinander umsetzt, dass mindestens eine isocyanatreaktive funktionelle Gruppe im Addukt verbleibt.

Die bevorzugten in obigem Schritt (1) eingesetzten Polyurethanpräpolymere werden in DE 199 48 004 A1, Seite 4, Zeile 19, bis Seite 8, Zeile 4, beschrieben. Die bevorzugten in obigem Schritt (2) eingesetzten Addukte werden in DE 199 48 004 A1, Seite 8, Zeile 5, bis Seite 9, Zeile 40 beschrieben. Bevorzugt wird die Pfropfmischpolymerisation, wie in DE 199 48 004 A1, Seite 12, Zeile 62, bis Seite 13, Zeile 48, beschrieben, mit den in DE 199 48 004 A1, Seite 11, Zeile 30, bis Seite 12, Zeile 60, beschriebenen Monomeren durchgeführt. Zur Verwendung in dem erfindungsgemäß einzusetzenden, wässrigen Basislack (A) wird das Pfropfmischpolymerisat (a.1.3), partiell oder vollständig neutralisiert, wodurch ein Teil oder alle der potenziell anionischen Gruppen, d. h. der Säuregruppen, in anionische Gruppe umgewandelt werden. Geeignete Neutralisationsmittel sind aus der DE 44 37 535 A1, Seite 6, Zeilen 7 bis 16, oder der DE 199 48 004 A1, Seite 7, Zeilen 4 bis 8, bekannt.

Der Gehalt an Bindemittel (a.1) im erfindungsgemäßen Beschichtungsmittel kann sehr breit variieren und richtet sich nach den Erfordernissen des Einzelfalls. Vorzugsweise liegt der Gehalt an (a.1) im erfindungsgemäßen Beschichtungsmittel, bezogen auf den Festkörper des erfindungsgemäßen Beschichtungsmittels, bei 10 bis 90 Gew.-%, insbesondere bei 15 bis 85 Gew.-%.

### Das Pigment (a.2)

Das erfindungsgemäße Beschichtungsmittel enthält mindestens ein Pigment (a.2). Vorzugsweise kann das Pigment (a.2) aus der Gruppe, bestehend aus organischen und anorganischen, farbgebenden, optisch effektgebenden, farb-und optisch effektgebenden, fluoreszieren den und phosphoreszierenden Pigmenten, insbesondere aus der Gruppe, bestehend aus organischen und anorganischen, farbgebenden, optisch effektgebenden, farb-und optisch effektgebenden Pigmenten, ausgewählt werden. Ganz besonders bevorzugt weist das Pigment (a.2) UV-absorbierende Bestandteile auf.

Beispiele geeigneter Effektpigmente, die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid, die Farbtöne von Rosa bis Braunrot aufweisen oder flüssigkristalline Effektpigmente. Ergänzend wird auf Römpp Lexikon Lacke und Druckfarben, Georg Thieme Verlag, 1998, Sei ten 176, »Effektpigmente« und Seiten 380 und 381 »Metalloxid-GlimmerPigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpimente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »Metallkomplex-Pigmente«, verwiesen.

Beispiele für fluoreszierende und phosphoreszierende Pigmente (Tagesleuchtpigmente) sind Bis(azomethin)-Pigmente.

Der Gehalten den Pigmenten (a.2) im erfindungsgemäßen Beschichtungsmittel kann sehr breit variieren und richtet sich in erster Linie nach der Intensität der Effekte, insbesondere der optischen Effekte, und/oder dem Buntton, der oder die eingestellt werden soll oder sollen. Vorzugsweise sind die Pigmente (a.2) im erfindungsgemäßen Beschichtungsmittel in einer Menge von 0,05 bis 60, bevorzugte 0,1 bis 50, besonders bevorzugt 0,5 bis 45 Gew.-%, bezogen auf den Festkörper des erfindungsgemäßen Beschichtungsmittels, enthalten.

Bevorzugt werden die Pigmente (a.2) zur Erleichterung der Einarbeitbarkeit in das Beschichtungsmittel mit mindestens einem vorstehend beschriebenen Bestandteil des Bindemittels (a.1) angerieben. Besonders bevorzugt wird die vorstehend beschriebene Komponente (a.1.2) des Bindemittels (a.1) zur Anreibung eingesetzt.

Besonders bevorzugt enthält das erfindungsgemäße Beschichtungsmittel mindestens ein UV-Strahlung absorbierendes Pigment (a.2.1). Vorzugsweise werden die UV-Strahlung absorbierenden Pigmente (a.2.1) aus der Gruppe, bestehend aus Titandioxid-Pigmenten und Ruß-Pigmenten, ausgewählt.

Der Gehalt an Titandioxid- und/oder Ruß-Pigment (a.2.1) im erfindungsgemäßen Beschichtungsmittel kann variieren und richtet sich nach den Erfordernissen des Einzelfalls, insbesondere nach dem Grad der Transmission der UV-Strahlung, der durch die weiteren Pigmente im erfindungsgemäßen Beschichtungsmittel und/oder in den weiteren Schichten der erfindungsgemäßen Mehrschichtlackierung hervorgerufen wird. Vorzugsweise liegt der Gehalt an Titandioxid-Pigment (a.2.1) im erfindungsgemäßen Beschichtungsmittel bezogen auf den Festkörper des erfindungsgemäßen Beschichtungsmittels, bei 0,1 bis 45 Gew.%, insbesondere 0,5 bis 40 Gew.-%. Vorzugsweise liegt der Gehalt an Ruß-Pigment (a.2.1) im erfindungsgemäßen Beschichtungsmittel, bezogen auf den Festkörper des erfindungsgemäßen Beschichtungsmittels, bei 0,005 bis 7,5 Gew.-%, insbesondere bei 0,01 bis 6 Gew.%

### Die korrosionsinhibierende Komponente (a.3)

Die korrosionsinhibierende Komponente (a.3) weist einen Grundkörper (GK), mindestens eine an (GK) kovalent gebundene funktionelle Gruppe (Gr'), die bei der thermischen Härtung der Mehrschichtlackierung bevorzugt mit den funktionellen Gruppen (Gr) des Bindemittels (a.1) reagiert, sowie mindestens einen von der funktionellen Gruppe (Gr') verschiedenen, an (bk) kovalent gebundenen ein- und/oder mehrzähnigen potentiell anionischen Liganden (L) mit Elektronendonor-Eigenschaft, welcher eine gute Haftung auf dem metallischen Substrat ermöglicht, welcher mit den bei der Korrosion des Substrats freigesetzten Metällionen Chelate bilden kann (zu "Chelaten" vergleiche Römpp Online, Georg Thieme Verlag, Stuttgart, New York, 2005, Kapitel "Chelate") und welcher bei der thermischen Härtung der Mehrschichtlackierung seine Eigenschaft als Chelatbildner nicht verliert und vorzugsweise vom Grundkörper (GK) in nur untergeordneten Anteilen, insbesondere in Anteilen von weniger als 25 mol-%, bezogen auf die Gesamtheit der Liganden (L), abspaltet, auf.

Die Liganden (L) hemmen durch Komplexierung und/oder Belegung der Metalloberfläche die Korrosion durch Reduktion des für die Korrosion frei zugänglichen Anteils der Metalloberfläche und/oder bewirken eine Verschiebung des elektrochemischen Potentials der an der Metalloberfläche gebildeten Halbzelle. Ferner kann die Komponente (a.3) zusätzlich durch eine Pufferwirkung die für die Korrosion notwendige Verschiebung des pH-Werts des wäßrigen Medium an der Grenzfläche zum Metall unterdrücken. Die Liganden (L) sind bevorzugt ausgewählt aus der Gruppe der
- Organophosphorverbindungen, wie insbesondere Organophosphonate, bevorzugt am organischen Substituenten hydroxyamino-oder amidofunktionalisierte Phosphonate,
- Organoschwefelverbindungen, wie insbesondere funktionalisierte Thioverbindungen wie Thiol-, Polythiol-, Thiocarbonsäure-, Thioaldehyd-, Thioketon-, Dithiocarbamat-, Sulfonamid- und/oder Thioamidverbindungen, bevorzugt Polythiole mit mindestens 2 Thiolgruppen, vorzugsweise mindestens 3 Thiolgruppen, besonders bevorzugt Polyesterpolythiole mit mindestens 3 Thiolgruppen,
- acylierte Harnstoffe und Thioharnstoffe, wie insbesondere Benzoylharnstoff- und/oder -thioharnstoffverbindungen,
- Di- und/oder Polyamine, wie insbesondere Ethylendiamintetraessigsäure (EDTA) oder bevorzugt höherfunktionelle Amine, wie beispielsweise Jeffcat®-Typen (Fa. Huntsman), wie insbesondere Trialkylamine, bevorzugt Diaminoalkyl-hydroxyalkylamine, wie ganz besonders bevorzugt N,N-bis(3-dimethylaminopropyl)-N-isopropanolamin (Jeffcat ® ZR50),
- Chinoline, Choline und/oder Benzimidazole, wie insbesondere Aminochinolin- und/oder Mercaptobenzimidazolverbindungen,
- Hydroxyverbindungen die insbesondere in sterisch günstiger Position, bevorzugt in 1,3-Stellung, weitere Iminogruppen aufweisen
- Carbonylverbindungen, die insbesondere in sterisch günstiger Position, bevorzugt in 1,3-Stellung, weitere Carbonyl-, Carbonsäure-, Thiocarbonyl- und/oder Iminogruppen aufweisen, besonders bevorzugt Acetylacetonatverbindungen,
- Carbene und/oder
- Acetylenverbindungen, wie insbesondere Propargylverbindungen.

Besonders bevorzugt werden die Liganden (L) durch Umsetzung der funktionellen Gruppen (Gr') des Grundkörpers (GK) mit Ligandenbildnern (LB) hergestellt, welche zur Einführung der ein- und/oder mehrzähnigen potentiell anionischen Liganden (L) in die Komponente (a.3) dienen, wobei die solchermaßen eingeführten Liganden (L) bei der thermischen Härtung der Mehrschichtlackierung ihre Eigenschaft als Chelatbildner nicht verlieren. Als Ligandenbildner (LB), die die Liganden (L) und weitere funktionelle Gruppen tragen, die mit funktionellen Gruppen (Gr') des Grundkörpers (GK) der Komponente (a.3) reagieren, sind alle Verbindungen mit ein- und/öder mehrzähnigenpotentiell anionischen Liganden (L) mit Elektronendonor-Eigenschaft geeignet, welche eine gute Haftung auf dem metallischen Substrat ermöglicht, welche mit den bei der Korrosion des Substrats freigesetzten Metallionen Chelate bilden können, welche bei der thermischen Härtung der Mehrschichtlackierung ihre Eigenschaft als Chelatbildner nicht verlieren.

Ganz besonders bevorzugte Ligandenbildner (LB) sind folgende Verbindungen:
- funktionalisierte Organophosphorverbindungen, wie insbesondere Organophosphonate, bevorzugt am organischen Substituenten hydroxy- amino- oder amidofunktionalisierte Phosphonate,
- funktionalisierte Organoschwefelverbindungen, wie insbesondere funktionalisierte Thioverbindungen wie Thiol-, Polythiol-, Thiocarbonsäure-, Thioaldehyd-, Thioketon-, Dithiocarbamat-, Sulfonamid- und/oder Thioamidverbindungen, bevorzugt Polythiole mit mindestens 2 Thiolgruppen, vorzugsweise mindestens 3 Thiolgruppen, besonders bevorzugt Polyesterpolythiole mit mindestens 3 Thiolgruppen
- acylierte Harnstoff- und/oderThioharnstoffverbindungen, wie insbesondere Benzoylharnstoff- und/oder -thioharnstoffverbindungen,
- funktionalisierte Di- und/oder Polyaminoverbindungen, wie insbesondere Ethylendiamintetraessigsäure (EDTA) oder bevorzugt höherfunktionelle Amine, wie beispielsweise Jeffcat-Typen (Fa. Huntsman), wie insbesondere Trialkylamine bevorzugt Diaminoalkylhydroxyalkylamine, wie ganz besonders bevorzugt N,N-bis(3-dimethylaminopropyl)-N-isopropanolamin (Jeffcat ® ZR50),
- funktionalisierte Chinolin-, Cholin- und/oder Benzimidazolverbindungen, wie insbesondere Aminochinolin- und/oder Mercaptobenzimidazolverbindungen,
- funktionalisierte Hydroxyverbindungen, die insbesondere in sterisch günstiger Position, bevorzugt in 1,3-Stellung, weitere Iminogruppen aufweisen
- funktionalisierte Carbonylverbindungen, die insbesondere in sterisch günstiger Position, bevorzugt in 1,3-Stellung, weitere Carbonyl-, Carbonsäure-, Thiocarbonyl- und/oder Iminogruppen aufweisen, besonders bevorzugt Acetylacetonatverbindungen.
- funktionalisierte Carbenverbindungen,
- funktionalisierte Acetylenverbindungen, wie insbesondere Propargylverbindungen, bevorzugt Propargylalkohol.

Beispiele geeigneter Grundkörper (GK) für die Komponenten (a.3) sind Aminoplastharze, wie insbesondere Melaminharze, Guanaminharze und/oder Harnstoffharze, anhydridgruppenhaltige Verbindungen oder Harze, wie beispielsweise Polysuccinsäureanhydrid, epoxygruppenhaltige Verbindung oder Harze, wie insbesondere aliphatische und/oder cycloa liphatische Polyepoxide, Tris(alkoxycarbonylamino)triazine, wie insbesondere solche, die in US-A-4,939,213, US-A-5,084,541 oder EP-A-0 624 577 beschrieben, carbonatgruppenhaltige Verbindungen oder Harze, beta-Hydroxyalkylamide sowie in der besonders bevorzugten Ausführungsform der Erfindung Polyisocyanate, die vorzugsweise teilweise blockiert sind, wobei der Grundkörper (GK) Uretdion- und/oder Isocyanuratgruppen und/oder Allophanatgruppen aufweist.

Bevorzugte funktionelle Gruppen (Gr') sind Hydroxyl-, Carbamat-, Epoxy-, Säure-, Säureanhydrid-, Amino- und/oder Isocyanatgruppen, wobei Isocyanatgruppen als funktionelle Gruppen (Gr') ganz besonders bevorzugt sind.

Der Grundkörper (GK) kann, wenn die Wasserlöslichkeit oder Wasserdispergierbarkeit der Komponente (a.3) noch nicht ausreichend ist, in bekannter Weise hydrophil modifiziert werden. Im Sinne der Erfindung wasserdispergierbar bedeutet, daß die Komponente (a.3) bis zu einer be- stimmten Konzentration in der wäßrigen Phase stabile Aggregate mit einem mittleren Teilchendurchmesser von < 500, bevorzugt < 100 nm und besonders bevorzugt < 50 Nanometer ausbilden. Hierfür werden insbesondere ionische und/oder nichtionische Substituenten in den Grundkörper (GK) eingeführt. Insbesondere sind dies im Falle anionischer Substituenten Phenolat-, Carboxylat-, Sulfonat- und/oder Sulfatgruppen, im Falle kationischer Substituenten Ammonium-, Sulfonium- und/oder Phosphoniumgruppen, sowie im Falle nichtionischen Gruppen oligo- oder polyalkoxylierte, besonders bevorzugt ethoxylierte, Substituenten.

Besonders bevorzugt enthält die Komponente (a.3) mindestens ein Di und/oder Polyisocyanat, bei welchem ein Teil der Isocyanatgruppen mit Blockierungsmitteln umgesetzt ist, welche bei der thermischen Härtung der Mehrschichtlackierung abspalten, und bei welchem der verbleibende Teil der Isocyanatgruppen mit den vorstehend beschriebenen Ligandenbildnern (LB) umgesetzt ist, welche zur Einführung der ein- und/oder mehrzähnigen potentiell anionische Liganden (L) in die Komponente (a.3) dienen, wobei die solchermaßen eingeführten Liganden (L) bei der thermischen Härtung der Mehrschichtlackierung ihre Eigenschaft als Chelatbildner nicht verlieren.

In der WO-A-02/02665 sind Polyisocyanate für Beschichtungsmittel beschrieben, bei welchen die Isocyanatgruppen teilweise oder vollständig mit Propargylgruppen umgesetzt werden, wobei die verbleibenden Isocyanatgruppen, mit gängigen Blockierungsmitteln umgesetzt sein können. Die Polyisocyanate werden gemeinsam mit Katalysatoren eingesetzt, welche die Umsetzung der Propargylgruppe mit funktionellen Gruppe der Bindemittelbestandteile bei der Härtung der Beschichtungsmittel katalysieren. Solchermaßen umgesetzte Propargylgruppen wirken nicht mehr als Chelatbildner im Sinne der vorliegenden Erfindung.

Beispiele bevorzugter Polyisocyanate sind Isocyanurat-, Biruret-, Allophahalt-, Iminooxadiazindion-, Urethan- Harnstoff- und/oder Uretdion aufweisende Polyisocyanate. Vorzugsweise werden aliphatische oder cycloaliphatische Polyisocyanate, insbesondere Hexamethylendiisocyanat, dimerisiertes oder trimerisiertes Hexamethylendiisocyanat, Isophorondiisocyanat, Dicyclohexylmethan-2,4'-diisocyanat, Dicyclohexylmethan-4,4'-diisocyanat, Diisocyanate, abgeleitet von Dimerfettsäuren, oder Gemische der vorgenannten Polyisocyanate eingesetzt.

Ganz besonders bevorzugt werden Uretdion- und/oder Isocyanuratgruppen und/oder Allophanatgruppen im Grundkörper (GK) aufweisende Polyisocyanate, insbesondere auf der Basis von Trimeren, Tetrameren, Pentameren und/oder Hexameren von Diisocyanaten, besonders bevorzugt von Hexamethylendiisocyanat, eingesetzt.

Als Blockierungsmittel für die bevorzugten Isocyanatgruppen (Gr') der Komponente (a.3) werden vorzugsweise die in DE 199 48 004 A1 auf Seite 15, Zeilen 5 bis 36, beschriebenen Verbindungen eingesetzt. Besonders bevorzugt als Blockierungsmittel sind Dimethylpyrazol und/oder Malonsäureester.

Ganz besonders bevorzugt als Verbindungen (a.3) sind Uretdion- und/oder Isocyanuratgruppen und/oder Allophanatgruppen aufweisende Polyisocyanate auf der Basis von Hexamethylendiisocyanat, bei welchen 10 bis 90 mol-%, vorzugsweise 25 bis 75 mol-% und insbesondere zu 35 bis 65 mol-%, bezogen auf die Gesamtzahl der freien Isocyanatgruppen, der Isocyanatgruppen insbesondere mit Dimethylpyrazol und/oder Malonsäureester blockiert sind, und bei welchen 10 bis 90 mol-%, vorzugsweise 25 bis 75 mol-% und insbesondere zu 35 bits 65 mol-%, bezogen auf die Gesamtzahl der freien Isocyanatgruppen, mit den oben angeführten bevorzugten Ligandenbildnern (LB) besonders bevorzugt Ligandenbildnern (LB), ausgewählt aus der Gruppe Di- bzw. Polyamine, wie insbesondere EDTA oder Jeffcat-Typen, wie vorzugsweise Trialkylamine, bevorzugt Diaminoalkyl-hydroxyalkylamine, wie ganz besonders bevorzugt Jeffcat ® ZR50, Aminochinolinen und/oder Benzimidazolen, Polythiolen mit mindestens 2 Thiolgruppen, bevorzugt mindestens 3 Thiolgruppen, wie ganz besonders bevorzugt Polyesterthiole mit mindestens 3 Thiolgruppen, und/oder funktionalisierten Acetylenen, wie ganz besonders bevorzugt Propargylalkohol, und Gemischen aus solchen Ligandenbildnern (LB) umgesetzt sind.

Die Komponente (a.3) ist im erfindungsgemäßen Beschichtungsmittel vorzugsweise in Mengen von 0,1 bis 20, bevorzugt 0,2 bis 10, besonders bevorzugt 0,5 bis 5 Gew.-%, jeweils bezogen auf das Gesamtgewicht des erfindungsgemäßen Beschichtungsmittels, enthalten.

### Die weiteren Bestandteile und die Herstellung des erfindungsgemäßen Beschichtungsmittels

In einer weiteren Ausführungsform der Erfindung enthält das erfindungsgemäße Beschichtungsmittel, mindestens eine Talkum-Komponente (a.4). Der Gehalt an Talkum (a.4) kann sehr breit variieren und richtet sich nach den Erfordernissen des Einzelfalls. Vorzugsweise liegt der Gehalt an (a.4), bezogen auf den Festkörper des erfindungsgemäßen Beschichtungsmittels, bei 0,1 bis 5 Gew.-%, insbesondere 0,5 bis 2 Gew.-%.

Darüber hinaus kann das erfindungsgemäße Beschichtungsmittel mindestens einen üblichen und bekannten Zusatzstoff (a.5) in wirksamen Mengen enthalten. Vorzugsweise wird der Zusatzstoff (a.5) oder werden die Zusatzstoffe (a.5) aus der Gruppe, bestehend aus von der Komponente (a.3) verschiedenen Vernetzungsmitteln; aus von den Bindemitteln (a.1) verschiedenen, oligomeren und polymeren Bindemitteln; aus von den Komponenten (a.2) bis (a.4) verschiedenen, organischen und anorganischen, farbigen, transparenten, opaken, organischen und anorganischen Pigmenten, Füllstoffen und Nanopartikeln, organischen Lösemitteln, Trockenstoffen, Antiabsetzmitteln, UV-Absorbern, Lichtschutzmitteln, Radikalfängern, Entlüftungsmitteln, Slipadditiven, Polymerisationsinhibitoren, Entschäumern, Emulgatoren, Netzmitteln, Haftvermittlern, Verlaufmitteln, Filmbildehilfsmitteln, sowie rheologiesteuernden Additiven und Flammschutzmitteln ausgewählt. Beispiele geeigneter Zusatzstoffe (a.5) werden in der deutschen Patentanmeldung DE 199 48 004 A 1, Seite 14, Zeile 32, bis Seite 17, Zeile 5, beschrieben.

Bevorzugt sind Aminoplastharze, wie beispielsweise in DE 199 48 004 A1, Seite 16, Zeilen 6 bis 14, beschrieben, als überwiegende oder alleinige von der Komponente (a.3) verschiedene Vernetzungsmittel im erfindungsgemäßen Beschichtungsmittel in Mengen von 0,1 bis 40, bevorzugt 0,3 bis 30, besonders bevorzugt 0,5 bis 25 Gew.-%, jeweils bezogen auf den Festkörper des erfindungsgemäßen Beschichtungsmittels, enthalten.

Methodisch weist die Herstellung des erfindungsgemäßen Beschichtungsmittels keine Besonderheiten auf, sondern erfolgt vorzugsweise durch das Vermischen der vorstehend beschriebenen Bestandteile und Homogenisieren der resultierenden Mischungen mit Hilfe üblicher und bekannter Mischverfahren und Vorrichtungen wie insbesondere Rührkessel, Rührwerksmühlen, Ultraturrax, In-line-Dissolver, statische Mischer, Zahnkranzdispergatoren, Druckentspannungsdüsen und/oder Microfluidizer.

### Die Applikation des erfindungsgemäßen Beschichtungsmittels

Zwar kann das erfindungsgemäße Beschichtungsmittel mit Hilfe aller üblichen und bekannten Methoden zur Applikation von flüssigen Beschichtungsstoffen appliziert werden Für das erfindungsgemäße Verfahren zur Herstellung der Mehrschichtlackierungen ist es aber von Vorteil, wenn das erfindungsgemäße Beschichtungsmittel mit Hilfe der elektrostatischen Spritzapplikation (ESTA), vorzugsweise mit Hochrotationsglocken, appliziert wird. Vorzugsweise wird das erfindungsgemäße Beschichtungsmittel in einer solchen Naßschichtdicke appliziert, dass nach der Härtung der resultierenden Lackschicht aus dem erfindungsgemäßen, Beschichtungsmittel eine Trockenschichtdicke von 6 bis 25 µm, bevorzugt 7 bis 20 µm, besonders bevorzugt 8 bis 18 µm, resultiert.

In dem bevorzugten Verfahren zur Herstellung von Mehrschichtlackierungen wird die Basislackierung (A) aus dem erfindungsgemäßen Beschichtungsmittel sofort mit einem thermisch härtbaren, wäßrigen Basislack (B) beschichtet. Besonders bevorzugt wird die Basislackierung (A) aus dem erfindungsgemäßen Beschichtungsmittel zuerst abgelüftet oder getrocknet, dabei aber nicht oder nur partiell gehärtet, und anschließend mit einem thermisch härtbaren, wäßrigen Basislack (B) be schichtet.

Vorzugsweise handelt es sich bei dem thermisch härtbaren, wäßrigen Basislack (B) um einen üblichen und bekannten wäßrigen Basislack, wie er beispielsweise aus der Patentanmeldung WO 2005/021168, Seite 24, Zei- len 11 bis 28 bekannt ist. In einer bevorzugten Ausführungsform der Erfin- dung weist der Basislack (B) mindestens einen Bestandteil, besonders bevorzugt ein Bindemittel, welche mit den funktionellen Gruppe (Gr') der Komponente (a.3) reagieren können.

In einer besonders bevorzugten Ausführungsform der Erfindung enthält der wäßrige Basislack (B) wie das erfindungsgemäße Beschichtungsmittel die Komponente (a.3) in Mengen von 0,1 bis 20, bevorzugt 0,2 bis 10, besonders bevorzugt 0,5 bis 5 Gew.-%, jeweils bezogen auf das Gesamtgewicht des Basislacks (B).

Zwar kann der Basislack (B) mit Hilfe aller üblichen und bekannten Methoden zur Applikation von flüssigen Beschichtungsstoffen appliziert werden, für das erfindungsgemäße Verfahren ist es aber von Vorteil, wenn er mit Hilfe der ESTA Hochrotation appliziert wird. Vorzugsweise wird er in einer solchen Naßschichtdicke appliziert, dass nach der Härtung der resultierenden Basislackschicht (B) eine Trockenschichtdicke von 4 bis 25 µm, bevorzugt 5 bis 15 µm, besonders bevorzugt 6 bis 10 µm, resultiert.

Vorzugsweise werden die Basislackierung (A) aus dem erfindungsgemäßen Beschichtungsmittel und der Basislack (B) mit einer solchen Naßschichtdicke appliziert, dass nach der Härtung eine Gesamt-Trockenschichtdicke von erfindungsgemäßen Beschichtungsmittel und Basislack (B) von insgesamt 10 bis 50 µm, bevorzugt 12 bis 35 µm, besonders bevorzugt 14 bis 28 µm, resultiert.

Die bevorzugten erfindungsgemäßen Mehrschichtlackierungen werden durch sukzessive Applikation der Basislackierung (A) aus dem erfindungsgemäßen Beschichtungsmittels, bevorzugt mindestens eines thermisch härtbaren, wäßrigen Basislacks (B) und mindestens eines Klarlacks (C)
(i) auf ein ungrundiertes Substrat,
(ii) auf ein mit mindestens einer nicht oder nur partiell gehärteten Grundierung (G) beschichtetes Substrat oder
(iii) auf ein mit mindestens einer vollständig gehärteten Grundierung (G) beschichtetes Substrat
und gemeinsame Härtung.
(a) der resultierenden Naßschichten aus dem erfindungsgemäßen Beschichtungsmittel, dem Basislack (B) und dem Klarlack (C) oder
(b) der resultierenden Naßschichten aus dem erfindungsgemäßen Beschichtungsmittel, dem Basislack (B) und dem Klarlack (C) sowie aus gegebenenfalls der nicht oder nur partiell gehärteten Grundierung (G) hergestellt.

Verfahren dieser Art sind beispielsweise aus der deutschen Patentanmeldung DE 44 38 504 A 1, Seite 4, Zeile 62, bis Seite 5, Zeile 20, und Seite 5, Zeile 59, bis Seite 6, Zeile 9, sowie aus der deutschen Patentanmeldung DE 199 48 004 A 1, Seite 17, Zeile 59, bis Seite 19, Zeile 22, und Seite 22, Zeilen 13 bis 31, i. V. m. Tabelle 1, Seite 21, bekannt.

Bei dem bevorzugten erfindungsgemäßen Verfahren wird die Basislackierung (A) aus dem erfindungsgemäßen Beschichtungsmittel oder bevorzugt dem Basislack (B) sofort mit dem Klarlack (C) beschichtet. Oder sie wird zuerst abgelüftet oder getrocknet, dabei aber nicht oder nur partiell gehärtet, und anschließend mit dem Klarlack (C) beschichtet.

Bei dem Klarlack (C) handelt es sich um einen transparenten, insbesondere optisch klaren, thermisch und/oder mit aktinischer Strahlung härtbaren Beschichtungsstoff. Als Klarlacke (C) kommen alle üblichen und bekannten Einkomponenten(1K)-, Zweikomponenten(2K)- oder Mehrkomponenten (3K, 4K)-Klarlacke, Pulverklarlacke, Pulverslurry-Klarlacke oder UV-härtbaren Klarlacke in Betracht. Der für das erfindungsgemäße Verfahren ausgewählte Klarlack (C) wird mit Hilfe der üblichen und bekannten Applikationsverfahren, die an den Aggregatzustand (flüssig oder pulverförmig) des Klarlacks (C) angepasst sind, appliziert. Geeignete Klarlacke und Verfahren zu deren Applikation sind beispielsweise aus der Patentanmeldung WO 2005/021168, Seite 25, Zeile 27, bis Seite 28, Zeile 23 bekannt. In einer bevorzugten Ausführungsform der Erfindung weist der Klarlack (C) mindestens einen Bestandteil, besonders bevorzugt ein Bindemittel, welche mit den funktionelle Gruppe (Gr') der Komponente (a.3) reagieren können.

Die Substrate können aus den unterschiedlichsten Materialien und Kombinationen von Materialien aufgebaut sein. Vorzugsweise bestehen sie zumindest teilweise aus Metallen, wobei räumlich neben den metallischen Substraten Kunststoffsubstrate angeordnet sein können, wie dies beispielsweise bei Kunststoffanbauteilen, die mit der Metallkarosse zusammengefügt werden, der Fall sein kann. Ganz besonders bevorzugt sind die Substrate aus Metallen, insbesondere aus Stählen aufgebaut.

Die Substrate können die unterschiedlichsten Verwendungszwecke haben. Vorzugsweise handelt es sich bei den Substraten um Karosserien von Kraftfahrzeugen, insbesondere PKW, Motorräder, Lastwagen und Omnibusse, und Teile hiervon; industrielle Kleinteile; Coils, Container und Gegenstände des täglichen Bedarfs. Insbesondere handelt es sich bei den Substraten um Karosserien von PKW und Teilen hiervon.

Als Grundierungen (G) können an sich alle bekannten anorganischen und/oder organischen Grundierungen, insbesondere für Metall oder Kunststoff, verwendet werden. Vorzugsweise werden übliche und bekannte Elektrotauchlackierungen als Grundierungen (G) verwendet. Die Elektrotauchlackierungen (G) werden in üblicher und bekannter Weise aus elektrophoretisch, insbesondere kathodisch, abscheidbaren Elektrotauchlacken hergestellt. Die resultierenden Elektrotauchlackschichten (G) werden vorzugsweise vor der Applikation des erfindungsgemäßen Beschichtungsmittels thermisch gehärtet. Sie können aber auch lediglich getrocknet und dabei nicht oder nur partiell gehärtet werden, wonach sie gemeinsam mit den übrigen Schichten aus erfindungsgemäßem Beschichtungsmittel, bevorzugt Basislack (B) und Klarlack (C) gehärtet werden.

Die Grundierung (G) weist vorzugsweise mindestens einen Bestandteil, besonders bevorzugt ein Bindemittel, welche mit den funktionelle Gruppe (Gr') der Komponente (a.3) reagieren können.

Bei dem bevorzugten erfindungsgemäßen Verfahren werden die applizierten Schichten aus erfindungsgemäßem Beschichtungsmittel, Basislack (B) und Klarlack (C) gemeinsam thermisch gehärtet. Sofern der Klarlack (C) auch noch mit aktinischer Strahlung härtbar ist, erfolgt noch eine Nachhärtung durch Bestrahlung mit aktinischer Strahlung. Sofern die Grundierung (G) noch nicht gehärtet ist, wird sie in diesem Verfahrensschritt mit ausgehärtet. Die thermische Härtung wird solchermaßen durchgeführt, daß die Liganden (L) vorzugsweise vom Grundkörper (GK) in nur untergeordneten Anteilen, insbesondere in Anteilen von weniger als 25 mol-%, bezogen auf die Gesamtheit der Liganden (L), abspalten und daß sie ihre Eigenschaft als Chelatbildner nicht verlieren.

Die Aushärtung kann nach einer gewissen Ruhezeit, auch als Ablüften bezeichnet, zwischen und nach dem Auftrag gegebenenfalls der Grundierung, des erfindungsgemäßen Beschichtungsmittels, des Basislacks (B) sowie abschließend des Klarlacks (C) erfolgen. Die Ruhezeit kann eine Dauer von 30 Sekunden bis 2 Stunden, vorzugsweise 1 Minute bis 1 Stunde und insbesondere 1 bis 45 Minuten haben. Sie dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte < 10 g Wasser/kg Luft, insbesondere < 5 g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Besonders bevorzugt wird ein Verfahren angewandt, bei der der Bestandteil Wasser rasch aus den Näßschichten entfernt wird. Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulverlacken«, beschrieben. Die thermische Härtung wird solchermaßen durchgeführt, daß die Liganden (L) vom Grundkörper (GK) in nur untergeordneten Anteilen, insbesondere in Anteilen von weniger als 25 mol-%, bezogen auf die Gesamtheit der Liganden (L), abspalten und daß sie ihre Eigenschaft als Chelatbildner nicht verlieren. Vorteilhafterweise erfolgt die thermische Härtung bei einer Temperatur von 50 bis 170, besonders bevorzugt 60 bis 165 und insbesondere 80 bis 150 °C während einer Zeit von 1 Minute bis zu 2 Stunden, besonders bevorzugt 2 Minuten bis zu 1 Stunde und insbesondere 3 bis 45 Minuten.

Die resultierenden Lackierungen sind von hervorragender Automobilqualität. Sie weisen neben einer hervorragenden Steinschlagfestigkeit eine ausgezeichnete Haftung auf der Grundierung (G) und zu den nachfolgenden Lackschichten sowie im Besonderen eine herausragende Beständigkeit gegen korrosive Unterwanderung und daraus resultierender Blisterkorrosion der Mehrschichtverbunde in der Nachbarschaft blanker Stellen, wie sie insbesondere durch Steinschlag erzeugt werden, auf.

### Beispiele

### Herstellbeispiel 1: Wäßrige Polyesterharzdispersion (a.1.1)

Aus 898 Gew.-Teilen Neopentylglykol, 946 Gew.-Teilen Hexan-1,6-diol, 570 Gew.-Teilen Hexahydrophthalsäureanhydrid, 2107 Gew.-Teile einer oligomeren Fettsäure (Pripol^{®}1012, Firma Uniqema, Dimerengehalt mindestens 97 Gew.-%, Trimerengehalt höchstens 1 Gew.-%, Monomerengehalt höchstens Spuren) und 946 Gew.-Teile Trimellithsäureanhydrid wurde in einem gängigen Lösemittel der Polyester (a.1.1) mit einer Säurezahl nach DIN EN ISO 3682 von 32 mg KOH / g nichtflüchtigen Anteil und einer Hydroxylzahl nach DIN EN ISO 4629 beträgt 72 mg KOH / g nichtflüchtigen Anteil hergestellt, in deionisiertes Wasser eingebracht und mit Dimethylethanolamin auf einen pH-Wert von 7,6 und mit weiterem deionisiertem Wasser auf einen Anteil nichtflüchtiger Bestandteile von 60,0 Gew.-%, eingestellt.

### Herstellbeispiel 2.1: Erste wäßrige Polyurethandispersion (a.1.2.1)

Aus 2017 Gew.-Teilen Hexan-1,6-diol, 1074 Gew.-Teilen Isophthalsäure und 3627 Gew.-Teilen einer oligomeren Fettsäure (Pripol^{®}1012, Firma Uniqema, Dimerengehalt mindestens 97 Gew.-%, Trimerengehalt höchstens 1 Gew.-%, Monomerengehalt höchstens Spuren) wurde in einem gängigen Lösemittel ein Polyestervorprodukt mit einer Säurezahl nach DIN EN ISO 3682 von 3 mg KOH/g nichtflüchtigen Anteil und einer Hydroxylzahl nach DIN EN ISO 4629 von 73 mg KOH / g nichtflüchtigen Anteil hergestellt und auf einen nichtflüchtigen Anteil von 73,0 Gew.-% eingestellt. 1891 Gew.-Teile des Polyestervorprodukts wurden in einem gängigen Lösemittel mit 113 Gew.-Teilen Dimethylolpropionsäure, 18 Gew.-Teilen Neopentylglykol und 517 Gew.-Teilen Isophorondiisocyanat erhitzt und die Reaktion wurde bis zu einem Isocyanatgehalt von 0,8 Gew.-%, bezogen auf die Gesamteinwaage, durchgeführt. Danach wurden 50 Gew.-Teile Trimethylolpropan zugegeben und gerührt bis keine freien Isocyanatgruppen mehr nachweisbar waren. Das Polyurethan mit einer Säurezahl nach DIN EN ISO 3682 von 25 mg KOH / g nichtflüchtigen Anteil wurde in deionisiertes Wasser eingebracht, das Lösemittel entfernt und mit weiterem deionisiertem Wasser sowie mit Dimethylethanolamin auf einen pH-Wert von 7,2 und auf einen nichtflüchtigen Anteil von 27,0 Gew.-%, eingestellt.

### Herstellbeispiel 2.2: Zweite wäßrige Polyurethandispersion (a.1.2.2)

Aus 1173 Gew.-Teilen Neopentylglykol, 1329 Gew.-Teilen Hexan-1,6-diol, 2469 Gew.-Teilen Isophthalsäure und 1909 Gew.-Teilen einer oligomeren Fettsäure (Pripol^{®}1012, Firma Uniqema, Dimerengehalt mindestens 97 Gew.-%, Trimerengehalt höchstens 1 Gew.-%, Monomerengehalt höchstens Spuren) wurde in einem gängigen Lösemittel ein Polyestervorprodukt mit einer Säurezahl nach DIN EN ISO 3682 von 3 mg KOH/g nichtflüchtigen Anteil und einer Hydroxylzahl nach DIN EN ISO 4629 von 75 mg KOH / g nichtflüchtigen Anteil hergestellt und auf einen nichtflüchtigen Anteil von 74,0 Gew.-% eingestellt. 2179 Gew.-Teile des Polyestervorprodukts wurden in einem gängigen Lösemittel mit 137 Gew.-Teilen Dimethylolpropionsäure, 24 Gew.-Teilen Neopentylglykol und 694 Gew.-Teilen m-Tetramethylxylendiisocyanat (m-TMXDI; TMXDI^{®} (Meta), Firma Cytec Ind.) erhitzt und die Reaktion wurde bis zu einem Isocyanatgehalt von 1,35 Gew.-%, bezogen auf die Gesamteinwaage, durchgeführt. Danach wurden 111 Gew.-Teile Trimethylolpropan zugegeben und gerührt bis keine freien Isocyanatgruppen mehr nachweisbar waren. Das Polyurethan mit einer Säurezahl nach DIN EN ISO 3682 von 25 mg KOH / g nichtflüchtigen Anteil wurde in deionisiertes Wasser eingebracht, das Lösemittel entfernt und mit weiterem deionisiertem Wasser sowie mit Dimethylethanolamin auf einen pH-Wert von 7,4 und auf einen nichtflüchtigen Anteil von 31,5 Gew.-%, eingestellt.

### Herstellbeispiel 3: Wäßrige Dispersion eines polyurethanmodifizierten Polyacrylats (a.1.3)

Aus 922 Gew.-Teilen Neopentylglykol, 1076 Gew.-Teilen Hexan-1,6-diol, 1325 Gew.-Teilen Isophthalsäure und 3277 Gew.-Teilen einer oligomeren Fettsäure (Pripol^{®}1012, Firma Uniqema, Dimerengehalt mindestens 97 Gew.-%, Trimerengehalt höchstens 1 Gew.-%, Monomerengehalt höchstens Spuren) wurde in einem gängigen Lösemittel ein Polyestervorprodukt mit einer Säurezahl nach DIN EN ISO 3682 von 3 mg KOH/g nichtflüchtigen Anteil und einer Hydroxylzahl nach DIN EN ISO 4629 von 78 mg KOH / g nichtflüchtigen Anteil hergestellt und auf einen nichtflüchtigen Anteil von 73,0 Gew.-% eingestellt. 4085 Gew.-Teile des Polyestervorprodukts wurden in einem gängigen Lösemittel mit 186 Gew.-Teilen Neopentylglykol und 1203 Gew.-Teilen m-Tetramethylxylendiisocyanat (TMXDI^{®} (Meta), Firma Cytec Ind.) erhitzt und die Reaktion wurde bis zu einem Isocyanatgehalt von 1,65 Gew.-%, bezogen auf die Gesamteinwaage, durchgeführt. Danach wurden 214 Gew.-Teile Diethanolamin (2,2'-Iminobisethanol) zugegeben und gerührt bis keine freien Isocyanatgruppen mehr nachweisbar waren. Das Polyurethanvorprodukt mit einer Säurezahl nach DIN EN ISO 3682 von 0,1 mg KOH / g nichtflüchtigen Anteil und einer Hydroxylzahl nach DIN EN ISO 4629 betrug 49 mg KOH / g nichtflüchtigen Anteil wurde mit einem gängigen Lösemittel auf einen nichtflüchtigen Anteil von 59,5 Gew.-%, eingestellt. In Gegenwart von 1017 Gew.-Teilen des Polyurethanvorprodukts wurde in einer ersten Stufe in einem gängigen Lösemittel eine Mischung aus 1369 Gew.-Teilen n-Butylacrylat, 919 Gew.-Teilen Hydroxyethylacrylat, 581 Gew.-Teilen Cyclohexylmethacrylat und 509 Gew.-Teilen Styrol unter Verwendung gängiger Initiatoren für die radikalische Polymerisation polymerisiert. Danach wurde in einer zweiten Stufe eine Mischung aus 273 Gew.-Teilen n-Butylacrylat, 184 Gew.-Teilen Hydroxyethylacrylat, 116 Gew.-Teilen Cyclohexylmethacrylat, 225 Gew.-Teilen Acrylsäure und 102 Gew.-Teilen Styrol unter Verwendung gängiger Initiatoren für die radikalische Polymerisation polymerisiert. Das polyurethanmodifizierte Polyacrylat mit einer Säurezahl nach DIN EN ISO 3682 von 33,5 mg. KOH / g nichtflüchtigen Anteil wurde in deionisiertes Wasser eingebracht und mit Dimethylethanolamin auf einen pH-Wert von 7,4 und auf einen nichtflüchtigen Anteil von 35,5 Gew.-%, eingestellt.

### Herstellbeispiele 4: Die korrosionsinhibierenden Komponenten (a.3) Herstellbeispiel 4.1.: Blockierte Polyisocyanate (a.3.1) bis (a.3.3) mit einem Liganden (L1):

0,07 mol des Ligandenbildners (LB1) (für die Komponenten (a.3.1): Tetramercaptopropionsäureester des Tetramethylolmethans (PET-3-MP der Fa. Bruno Bock), (a.3.2): N,N-bis(3-dimethylaminopropyl)-N-isopropanolamin (Jeffcat ZR ® 50 der Fa. Huntsman) und (a.3.3): Progargylalkohol) wurden zusammen mit 50 g (5,81% NCO-Gehalt) einer 81%igen Butylacetat-Lösung eines verzweigten und zu 50% mit Dimethylpyrazol blockierten Polyisocyanats auf der Basis von Hexamethylen-1,6-diisocyanat (Bayhydur VP LS 2319 der Fa. Bayer AG) für vier Stunden bei 80°C zur Reaktion gebracht. Es wurde eine Lösung erhalten, die ohne weitere Reinigung eingesetzt wurde.

### Herstellbeispiel 4.2.: Blockierte Polyisocyanate (a.3.4) bis (a.3.6) mit zwei Liganden (L1) und (L2):

Jeweils 0,035 mol des Ligandenbildners (LB1) (für die Komponenten (a.3.4): Mercaptobenzimidazol (a.3.5): 8-Aminocholin, (a.3.6): Progargylalkohol) wurden zusammen mit 50 g (5,81% NCO-Gehalt) einer 81%igen Butylacetat-Lösung eines verzweigten und zu 50% mit Dimethylpyrazol blockierten Polyisocyanats auf der Basis von Hexamethylen-1,6-diisocyanat (Bayhydur VP LS 2319 der Fa. Bayer AG) für zwei Stunden bei 80°C zur Reaktion gebracht. Anschließend wurden 8,58 g (0,035 mol) N,N-bis(3-dimethylaminopropyl)-N-isopropanolamin (Jeffcat ZR ® 50 der Fa. Huntsman) als Ligandenbildner (LB2) zugegeben und erneut für zwei Stunden bei 80°C umgesetzt. Es wurde eine Lösung erhalten, die ohne weitere Reinigung **eingesetzt** wurde.

### Herstellbeispiel 5: Die Herstellung des erfindungsgemäßen Beschichtungsmittels

15,0 Gew.-Teile einer Paste eines synthetischen Natrium-Aluminium-Silikates mit Schichtstruktur der Firma Laporte (3%-ig in Wasser) wurden mit 25,0 Gew.-Teilen einer wäßrigen Dispersion eines Polyurethans (a.1.2.1) gemäß Herstellbeispiel 2.1, 3,0 Gew.-Teilen einer wäßrigen Lösung eines Polyesterharzes (a.1.1) gemäß Herstellbeispiel 1,3,3 Gew.-Teilen Butylglykol, 4,8 Gew.-Teilen eines handelsüblichen Melaminharzes (Cymel 327 der Fa. Cytec), 0,3 Gew.-Teilen einer Neutralisationslösung (Dimethylethanolamin 10% -ig in Wasser), 4,0 Gew.-Teilen einer Dispersion eines polyurethanmodifiziertem Polyacrylates (a.1.3) gemäß Herstellbeispiel 3, 2,7 Gew.-Teilen Isopropanol, 2,4 Gew.-Teilen Ethylhexanol, 0,6 Gew.-Teilen Katalysator Nacure 2500 (para-Toluolsulfonsäure 25% in Isopropanol), 10 Gew.-Teilen einer Rußpaste (Anreibung von 10% Flammruß in einer wäßrigen Dispersion eines Polyurethans (a.1.2.2) gemäß Herstellbeispiel 2.2), 14 Gew.-Teilen einer Weißpaste (Anreibung von 50% Titandioxid in einer wäßrigen Dispersion eines Polyurethans (a.1.2.2) gemäß Herstellbeispiel 2.2), 5,4 Gew.-Teilen deionisiertem Wasser, 1,2 Gew.-Teilen einer 1:1 Mischung eines Polyurethanverdickers (Nopco DSX 1550 der Fa. Henkel) mit Butylglycol, 6,3 Gew.-Teilen deionisiertem Wasser und 2,0 Gew.-Teilen Korrosionsinhibitor (a.3.1) bis (a.3.3) gemäß Herstellbeispiel 4.1 und (a.3.4) bis (a.3.6) gemäß Herstellbeispiel 4.2 vermischt.

Anschließend wird das Beschichtungsmittel mit einem handelsüblichen Rheomat auf Spritzviskosität 90-100 mPas /1000 s⁻¹ eingestellt.

### Beispiele 1 bis 6: Die Herstellung der erfindungsgemäßen Mehrschichtlackierungen und deren Prüfung

Für die Beispiele 1 bis 6 wurde das erfindungsgemäße Beschichtungsmittel gemäß Herstellbeispiel 5 enthaltend korrosionsinhibierende Stoffe (a.3.1) bis (a.3.3) gemäß Herstellbeispiel 4.1 und korrosionsinhibierende Stoffen (a.3.4) bis (a.3.6) gemäß Herstellbeispiel 4.2, ein wäßriger Basislack (B), welcher mindestens ein Bindemittel mit Hydroxylgruppen als funktionelle Gruppen (Gr") aufweist, (Metallic-Wasserbasislack Black Sapphire der Fa. BASF Coatings AG), enthaltend ebenfalls die jeweilige Komponente (a.3) in einem Anteil von 2 Gew.-%, bezogen auf den Basislack (B), und ein handelsüblicher Einkomponenten-Klarlack (C), welcher mindestens ein Bindemittel mit Hydroxylgruppen als funktionelle Gruppen (Gr") aufweist, (Protect 2 der Fa. Dupont) verwendet.

Für das Vergleichsbeispiel V 1 wurde das Beschichtungsmittel gemäß Herstellbeispiel 5 sowie der vorstehende Basislack (B) (Metallic-Wasserbasislack Black Sapphire der Fa. BASF Coatings AG) jeweils ohne Komponente (a.3) verwendet.

Als Substrate wurden Prüftafeln aus verzinkten Stahl der Abmessungen 20 x 20 cm, die mit einer üblichen und bekannten Elektrotauchlackierung als Grundierung (G), welche mindestens ein Bindemittel mit Hydroxylgruppen als funktionelle Gruppen (Gr") aufweist, mit einer Trockenschichtdicke von 20 µm beschichtet waren, verwendet.

Bei den Beispielen 1 bis 6 sowie beim Vergleichsbeispiel V1 wurden zunächst die Basislackierung (A) aus dem erfindungsgemäßen Beschichtungsmittel gemäß Herstellbeispiel 5 durch elektrostatische Spritzapplikation (ESTA) in einer solchen Naßschichtdicke aufgetragen, daß nach der Aushärtung eine Trockenschichtdicke von 15 µm resultierte. Die resultierende Schicht aus dem erfindungsgemäßen Beschichtungsmittel wurde während 4 Minuten abgelüftet und anschließend mit dem wäßrigen Basislack (B) durch pneumatische Spritzapplikation in einer solchen Naßschichtdicke beschichtet, daß nach der Aushärtung eine Trockenschichtdicke von 7 µm resultierte. Die Lackschichten aus Basislackierung (A) und Basislack (B) wurden während 10 Minuten bei 80 °C getrocknet. Danach wurde der Klarlack (C) in einer solchen Naßschichtdicke appliziert, daß nach der Aushärtung eine Trockenschichtdicke von 40 µm resultierte. Die Klarlackschicht (C) wurde während 5 Minuten abgelüftet. Anschließend wurden die Schichten auserfindungsgemäßem Beschichtungsmittel, Basislack (B) und Klarlack (C) in einem Umluftofen während 30 Minuten bei 130 °C ausgehärtet.

Die Haftung der Schicht aus Basislackierung (A) zu der darunterliegenden Grundierung (G) sowie zu der Schicht aus Basislack (B) ist ausgezeichnet.

Der Schädigung der Prüftafeln (Steinschlagsimulation) erfolgte nach folgendem Verfahren:
Die frisch lackierten Prüflinge mussten nach dem letzten Lackiervorgang mindestens 48 Stunden bei Raumtemperatur ruhen, bevor sie beschossen wurden.

Der Beschuss der lackierten Prüflinge erfolgte mit einem Steinschlagprüfgerät Typ 508 der Fa. Erichsen gemäß DIN 55996-1. Auf das Durchgangsrohr des Steinschlagprüfgerätes wurde ein Aluminiumrohr (Innendurchmesser von 3,4 cm, einer Länge von 26,3 cm oben sowie 27,8 cm unten und einem Abstand von 2,0 - 2,3 cm zum Prüfkörper (die Länge des Rohrabschnittes ist dem jeweiligen Steinschlagprüfgerät anzupassen) gesetzt, um den Beschuss gezielt und definiert auf eine begrenzte kreisrunde Fläche zu richten. Beschossen wurde mit 50 g Hartgussstrahlmittel Diamant 4-5 mm der Fa. Eisenwerk Würth GmbH Bad Friedrichshall bei einem Druck von 2 bar. Um die Beschusszeit auf etwa 10 Sekunden zu strecken, gab man das Strahlmittel entsprechend langsam in das laufende Steinschlaggerät.

Nach der Belastung in der Steinschlagsimulation wurden die Proben einem Klimawechseltest KWT nach VDA-Prüfblatt 621-415 (Februar 1982) unterworfen, wobei die Prüflinge 15 Wochenzyklen durchliefen und wobei 1 Wochenzyklus folgendermaßen strukturiert war:
Montag:
   Salzsprühnebelprüfung nach DIN ISO 9227
Dienstag bis Freitag:
   Konstantklima bei 40 °C nach DIN ISO 6270-2KK
Samstag und Sonntag:
   Regeneration bei 23°C und 50% relativer Luftfeuchte

Die korrosionsbedingte Zuwachsrate der ursprünglich durch den Steinschlag geschädigten Fläche wurde bildanalytisch ermittelt. Nach 9 Wochen wurde die wochenmittlere Zuwachsrate errechnet.

In Tabelle 1 sind die Ergebnisse zusammengestellt. Man erkennt, daß beim Einsatz der erfindungsgemäßen Komponenten (a.3) eine deutliche Reduktion des korrosionsbedingten Zuwachses der geschädigten Fläche bei den in der Steinschlagsimulation belasteten Proben resultiert.

**Tabelle 1: Ergebnisse der Klimawechseltests (KWT)**

| Komponente (a.3) | Ligandenbildner (LB1) | Ligandenbildner (LB2) | KWT: Zuwachsrate der geschädigten Fläche in % pro Woche |
|---|---|---|---|
| (a.3.1) | PET-3-MP | - | 1,507 |
| (a.3.2) | Jeffcat ZR50 | - | 1,443 |
| (a.3.3) | Propargylalkohol | - | 1,300 |
| (a.3.4) | Mercaptobenzimidazol | Jeffcat ZR50 | 1,900 |
| (a.3.5) | 8-Aminochinolin | Jeffcat ZR50 | 1,523 |
| (a.3.6) | Propargylalkohol | Jeffcat ZR50 | 1,227 |
| Vergleichsbeispiel V1 | - | - | 2,300 |

## Patentansprüche

1. Beschichtungsmittel für eine Mehrschichtlackierung enthaltend
(a.1) mindestens ein Bindemittel mit funktionellen Gruppen (Gr),
(a.2) mindestens ein Pigment und
(a.3) mindestens eine korrosionsinhibierende Komponente, welche einen Grundkörper (GK),
mindestens eine an (GK) kovalent gebundene funktionelle Gruppe (Gr'), die bei der thermischen Härtung der Mehrschichtlackierung mit den funktionellen Gruppen (Gr) des Bindemittels (a.1) reagiert,
sowie mindestens einen von der funktionellen Gruppe (Gr') verschiedenen, an (GK) kovalent gebundenen ein- und/oder mehrzähnigen potentiell anionischen Liganden (L), welcher bei der thermischen Härtung der Mehrschichtlackierung seine Eigenschaft als Chelatbildner nicht verliert und welcher ausgewählt ist aus der Gruppe der
- Organophosphorverbindungen,
- Organoschwefelverbindungen,
- acylierten Harnstoffe und Thioharnstoffe,
- Di- und/oder Polyamine,
- Chinoline, Choline und/oder Benzimidazole,
- Hydroxyverbindungen, die weitere Iminogruppen aufweisen,
- Carbonylverbindungen, die weitere Carbonyl-, Carbonsäure Thiocarbonyl- und/oder Iminogruppen aufweisen,
- Carbene und/oder Acetylenverbindungen,
**dadurch gekennzeichnet, daß** der Grundkörper (GK) Uretdion- und/oder Isocyanuratgruppen und/oder Allophanatgruppen aufweist.

2. Beschichtungsmittel nach Anspruch 1, **dadurch gekennzeichnet, daß** die funktionelle Gruppe (Gr') eine Isocyanatgruppe ist.

3. Beschichtungsmittel nach einem der Ansprüche 1 oder 2, **dadurch gekennzeichnet, daß** die funktionelle Gruppe (Gr) des Bindemittels (a.1) eine Hydroxylgruppe ist.

4. Beschichtungsmittel nach einem der Ansprüche 1 bis 3, **dadurch gekennzeichnet, daß** es ein wäßriger Basislack ist.

5. Beschichtungsmittel nach einem der Ansprüche 1 bis 4, **dadurch gekennzeichnet, daß** als Bindemittel (a.1) Kombinationen aus mindestens 2 Komponenten ausgewählt aus wasserverdünnbaren Polyesterharzen (a.1.1), wasserverdünnbaren Polyurethanharzen (a.1.2) und/oder wasserverdünnbaren Polyacrylatharzen (a.1.3) eingesetzt werden.

6. Beschichtungsmittel nach einem der Ansprüche 1 bis 5, **dadurch gekennzeichnet, daß** der Ligand (L) der Komponente (a.3) ausgewählt ist aus der Gruppe der
- am organischen Substituenten hydroxy- amino- oder amidofunktionalisierten Phosphonate,
- funktionalisierten Thioverbindungen ausgewählt aus der Gruppe der Thiol-, Polythiol-, Thiocarbonsäure-, Thioaldehyd-, Thioketon-, Dithiocarbamat-, Sulfonamid- und/oder Thioamidverbindungen,
- Benzoylharnstoff- und/oder -thioharnstoffverbindungen,
- Ethylendiamintetraessigsäure (EDTA) oder N,N-bis(3-dimethylaminopropyl)-N-isopropanolamin,
- Aminochinolin- und/oder Mercaptobenzimidazolverbindungen,
- Hydroxyverbindungen, die in 1,3-Stellung weitere Iminogruppen aufweisen,
- Acetylacetonatverbindungen,
- Carbene und/oder Propargylverbindungen.

7. Beschichtungsmittel nach einem der Ansprüche 1 bis 6, **dadurch gekennzeichnet, daß** der Ligand (L) in die Komponente (a.3) durch Umsetzung der funktionellen Gruppe (Gr') mit Ligandenbildnern (LB) eingeführt wird, wobei (LB) ausgewählt ist aus der Gruppe der
- funktionalisierten Organophosphorverbindungen,
- funktionalisierten Organoschwefelverbindungen,
- acylierten Harnstoff- und/oder Thioharnstoffverbindungen,
- funktionalisierten Di- und/oder Polyaminoverbindungen,
- funktionalisierten Chinolin-, Cholin- und/oder Benzimidazolverbindungen,
- funktionalisierten Hydroxyverbindungen, die weitere Iminogruppen aufweisen,
- funktionalisierten Carbonylverbindungen, die weitere Carbonyl-, Carbonsäure-, Thiocarbonyl- und/oder Iminogruppen aufweisen, funktionalisierten Carbenverbindungen, und/oder
- funktionalisierten Acetylenverbindungen.

8. Beschichtungsmittel nach Anspruch 7, **dadurch gekennzeichnet, daß** der Ligand (L) in die Komponente (a.3) durch Umsetzung der funktionellen Gruppe (Gr') mit Ligandenbildnern (LB) eingeführt wird, wobei (LB) ausgewählt ist aus der Gruppe der
- am organischen Substituenten hydroxy- amino- oder amidofunktionalisierten Phosphate oder Phosphonate,
- funktionalisierten Thioverbindungen ausgewählt aus der Gruppe der Thiol-Polythiol-, Thiocarbonsäure-, Thioaldehyd-, Thioketon-, Dithiocarbamat-, Sulfonamid- und/oder Thioamidverbindungen,
- Benzoylharnstoff- und/oder -thioharnstoffverbindungen,
- Ethylendiamintetraessigsäure (EDTA) oder N,N-bis(3-dimethylaminopropyl)-N-isopropanolamin,
- Aminochinolin- und/oder Mercaptobenzimidazolverbindungen,
- funktionalisierten Hydroxyverbindungen, die in 1,3-Stellung weitere Iminogruppen aufweisen,
- Acetylacetonatverbindungen.
- funktionalisierten Carbenverbindungen, und/oder
- Propargylalkohol.

9. Mehrschichtlackierungen, umfassend
(1) mindestens einer erste Basislackierung (A) aus dem Beschichtungsmittel gemäß den Ansprüchen 1 bis 8,
(2) mindestens einer zweite farb- und/oder effektgebenden Basislackierung aus Basislack (B) und
(3) mindestens einer transparenten Lackierung aus Klarlack (C).

10. Verfahren zur Herstellung von Mehrschichtlackierungen, umfassend die aufeinanderfolgende Applikation von
(1) mindestens einer ersten Basislackierung (A) aus dem Beschichtungsmittel gemäß den Ansprüchen 1 bis 8,
(2) mindestens einer zweiten farb- und/oder effektgebenden Basislackierung aus Basislack (B) und
(3) mindestens einer transparenten Lackierung aus Klarlack (C)
(i) auf ein ungrundiertes Substrat, oder
(ii) auf ein mit mindestens einer nicht oder nur partiell gehärteten Grundierung (G) beschichtetes Substrat, oder
(iii) auf ein mit mindestens einer vollständig gehärteten Grundierung (G) beschichtetes Substrat.

11. Verfahren nach Anspruch 10, **dadurch gekennzeichnet,**
**daß** eine gemeinsame Härtung der resultierenden Naßschichten aus dem Basislack (A), dem Basislack (B) und dem Klarlack (C) sowie gegebenenfalls aus der nicht oder nur partiell gehärteten Grundierung (G) erfolgt.

12. Verfahren nach einem der Ansprüche 10 oder 11, **dadurch gekennzeichnet, daß** der Basislack (B) die Komponente (a.3) enthält.

13. Verfahren nach einem der Ansprüche 10 bis 12, **dadurch gekennzeichnet, daß** die Grundierung (G) aus einer gehärteten Elektrotauchlackierung besteht.

14. Verfahren nach einem der Ansprüche 10 bis 13, **dadurch gekennzeichnet, daß** der Basislack (A) und der Basislack (B) mit einer solchen Naßschichtdicke appliziert werden, dass nach der Härtung eine gemeinsame Trockenschichtdicke des Basislacks (A) und des Basislacks (B) von insgesamt 10 bis 50 µm resultiert.

15. Verfahren nach einem der Ansprüche 10 bis 14, **dadurch gekennzeichnet, daß** der Basislack (A) mit einer solchen Naßschichtdicke appliziert wird, dass nach der Härtung eine Trockenschichtdicke des Basislacks (A) von 6 bis 25 µm resultiert.

## Claims

1. Coating composition for a multicoat paint system comprising
(a.1) at least one binder with functional groups (Gr),
(a.2) at least one pigment, and
(a.3) at least one corrosion-inhibiting component which comprises
a parent structure (GK),
at least one functional group (Gr') which is attached covalently to (GK) and which, when the multicoat paint system is thermally cured, reacts with the functional groups (Gr) of the binder (a.1),
and at least one uni- and/or multidentate, potentially anionic ligand (L) which is different from the functional group (Gr'), is attached covalently to (GK), and, when the multicoat paint system is thermally cured, does not lose its capacity as a chelating agent and which is selected from the group consisting of
- organophosphorus compounds,
- organosulphur compounds,
- acylated ureas and thioureas,
- diamines and/or polyamines,
- quinolines, cholines and/or benzimidazoles,
- hydroxy compounds which contain further imino groups,
- carbonyl compounds which contain further carbonyl, carboxylic acid, thiocarbonyl and/or imino groups,
- carbenes and/or acetylene compounds,
**characterized in that** the parent structure (GK) contains uretdione and/or isocyanurate groups and/or allophanate groups.

2. Coating composition according to Claim 1, **characterized in that** the functional group (Gr') is an isocyanate group.

3. Coating composition according to either of Claims 1 and 2, **characterized in that** the functional group (Gr) of the binder (a.1) is a hydroxyl group.

4. Coating composition according to any of Claims 1 to 3, **characterized in that** it is an aqueous basecoat material.

5. Coating composition according to any of Claims 1 to 4, **characterized in that** use is made as binder (a.1) of combinations of at least 2 components selected from water-dilutable polyester resins (a.1.1), water-dilutable polyurethane resins (a.1.2) and/or water-dilutable polyacrylate resins (a.1.3).

6. Coating composition as claimed in any of Claims 1 to 5, **characterized in that** the ligand (L) of component (a. 3) is selected from the group consisting of
- phosphonates hydroxy-, amino- or amido-functionalized on the organic substituent,
- functionalized thio compounds selected from the group of thiol, polythiol, thiocarboxylic acid, thioaldehyde, thioketone, dithiocarbamate, sulfonamide and/or thioamide compounds,
- benzoylurea compounds and/or benzoylthiourea compounds,
- ethylenediaminetetraacetic acid (EDTA) or N,N-bis(3-dimethylaminopropyl)-N-isopropanolamine,
- aminoquinoline compounds and/or mercaptobenzimidazole compounds,
- hydroxy compounds which contain further imino groups in 1,3-position,
- acetylacetonate compounds,
- carbenes and/or propargyl compounds.

7. Coating composition according to any of Claims 1 to 6, **characterized in that** the ligand (L) is introduced into the component (a.3) by reaction of the functional group (Gr') with ligand formers (LB), (LB) being selected from the group consisting of
- functionalized organophosphorus compounds,
- functionalized organosulphur compounds,
- acylated urea compounds and/or thiourea compounds,
- functionalized diamino and/or polyamino compounds,
- functionalized quinoline compounds, choline compounds and/or benzimidazole compounds,
- functionalized hydroxy compounds which contain further imino groups
- functionalized carbonyl compounds which contain further carbonyl, carboxylic acid, thiocarbonyl and/or imino groups functionalized carbene compounds, and/or
- functionalized acetylene compounds.

8. Coating composition as claimed in Claim 7, **characterized in that** the ligand (L) is introduced into the component (a.3) by reaction of the functional group (Gr') with ligand formers (LB), (LB) being selected from the group consisting of
- phosphates or phosphonates hydroxy-, amino- or amido-functionalized on the organic substituent,
- functionalized thio compounds selected from the group of thiol, polythiol, thiocarboxylic acid, thioaldehyde, thioketone, dithiocarbamate, sulfonamide and/or thioamide compounds,
- benzoylurea compounds and/or benzoylthiourea compounds,
- ethylenediaminetetraacetic acid (EDTA) or N,N-bis(3-dimethylaminopropyl)-N-isopropanolamine
- aminoquinoline compounds and/or mercaptobenzimidazole compounds,
- functionalized hydroxy compounds which contain further imino groups in 1,3-position,
- acetylacetonate compounds,
- functionalized carbene compounds, and/or
- propargyl alcohol.

9. Multicoat paint system comprising
(1) at least one first basecoat (A) comprising the coating composition according to any of Claims 1 to 8,
(2) at least one second, color and/or effect basecoat comprising basecoat material (B), and
(3) at least one transparent coating comprising clearcoat material (C).

10. Process for producing a multicoat paint system, comprising the successive application of
(1) at least one first basecoat (A) comprising the coating composition according to any of Claims 1 to 8,
(2) at least one second, color and/or effect basecoat comprising basecoat material (B), and
(3) at least one transparent coating comprising clearcoat material (C),
(i) to an unprimed substrate, or
(ii) to a substrate coated with at least one uncured or partly cured primer (G), or
(iii) to a substrate coated with at least one fully cured primer (G).

11. Process according to Claim 10, **characterized in that**
the resulting wet films, comprising the basecoat material (A), the basecoat material (B), and the clearcoat material (C), and also, where appropriate, the uncured or partly cured primer (G), are jointly cured.

12. Process according to either of Claims 10 and 11, **characterized in that** the basecoat material (B) comprises the component (a.3).

13. Process according to any of Claims 10 to 12, **characterized in that** the primer (G) is composed of a cured electrocoat.

14. Process according to any of Claims 10 to 13, **characterized in that** the basecoat material (A) and the basecoat material (B) are applied at a wet film thickness such that curing results in a joint dry film thickness of the basecoat material (A) and of the basecoat material (B) of in total 10 to 50 µm.

15. Process according to any of Claims 10 to 14, **characterized in that** the basecoat material (A) is applied with a wet film thickness such that curing results in a dry film thickness of the basecoat material (A) of 6 to 25 µm.

## Revendications

1. Agent de revêtement pour un laquage multicouche contenant
(a.1) au moins un liant présentant des groupes fonctionnels (Gr),
(a.2) au moins un pigment et
(a.3) au moins un composant inhibant la corrosion contenant un corps de base (GK),
au moins un groupe fonctionnel (Gr') lié par covalence à (GK), qui réagit lors du durcissement thermique du laquage multicouche avec les groupes fonctionnels (Gr) du liant (a.1),
ainsi qu'au moins un ligand (L) différent des groupes fonctionnels (Gr'), lié par covalence à (GK), monodentate et/ou multidentate, potentiellement anionique, qui ne perd pas sa propriété de chélatant lors du durcissement thermique du laquage multicouche et qui est choisi dans le groupe formé par
- les composés organophosphorés,
- les composés organosoufrés,
- les urées et thio-urées acylées,
- les diamines et/ou les polyamines,
- les quinoléines, les cholines et/ou les benzimidazoles,
- les composés hydroxy qui présentent d'autres groupes imino,
- les composés carbonyle qui présentent d'autres groupes carbonyle, acide carboxylique, thiocarbonyle et/ou imino,
- les carbènes et/ou les composés acétylène,
**caractérisé en ce que** le corps de base (GK) présente des groupes uretdione et/ou isocyanurate et/ou allophanate.

2. Agent de revêtement selon la revendication 1, **caractérisé en ce que** le groupe fonctionnel (Gr') est un groupe isocyanate.

3. Agent de revêtement selon l'une quelconque des revendications 1 ou 2, **caractérisé en ce que** le groupe fonctionnel (Gr) du liant (a.1) est un groupe hydroxyle.

4. Agent de revêtement selon l'une quelconque des revendications 1 à 3, **caractérisé en ce qu'**il s'agit d'une laque de base aqueuse.

5. Agent de revêtement selon l'une quelconque des revendications 1 à 4, **caractérisé en ce qu'**on utilise, comme liant (a.1), des combinaisons d'au moins 2 composants, choisis parmi les résines de polyester diluables à l'eau (a.1.1), les résines de polyuréthane diluables à l'eau (a.1.2) et/ou les résines de polyacrylate diluables à l'eau (a.1.3).

6. Agent de revêtement selon l'une quelconque des revendications 1 à 5, **caractérisé en ce que** le ligand (L) du composant (a.3) est choisi dans le groupe formé par
- les phosphonates fonctionnalisés sur les substituants organiques par hydroxy, amino ou amido,
- les composés thio fonctionnalisés choisis dans le groupe formé par les composés thiol, polythiol, acide thiocarboxylique, thioaldéhyde, thiocétone, dithiocarbamate, sulfonamide et/ou thioamide,
- les composés benzoylurée et/ou benzoylthio-urée,
- l'acide éthylènediaminetétraacétique (EDTA) ou la N,N-bis(3-diméthylaminopropyl)-N-isopropanolamine,
- les composés aminoquinoléine et/ou mercaptobenzimidazole,
- les composés hydroxy qui présentent d'autres groupes imino en position 1,3,
- les composés acétylacétonate,
- les carbènes et/ou les composés propargyle.

7. Agent de revêtement selon l'une quelconque des revendications 1 à 6, **caractérisé en ce que** le ligand (L) dans le composant (a.3) est introduit par transformation du groupe fonctionnel (Gr') avec des agents de formation de ligands (LB), (LB) étant choisi dans le groupe formé par
- les composés organophosphorés fonctionnalisés,
- les composés organosoufrés fonctionnalisés,
- les composés urée et/ou thio-urée acylés,
- les composés diamino et/ou polyamino fonctionnalisés,
- les composés quinoléine, choline et/ou benzimidazole fonctionnalisés,
- les composés hydroxy fonctionnalisés, qui présentent d'autres groupes imino,
- les composés carbonyle fonctionnalisés qui présentent d'autres groupes carbonyle, acide carboxylique, thiocarbonyle et/ou imino,
- les composés carbène fonctionnalisés et/ou
- les composés acétylène fonctionnalisés.

8. Agent de revêtement selon la revendication 7, **caractérisé en ce que** le ligand (L) dans le composant (a.3) est introduit par transformation du groupe fonctionnel (Gr') avec des agents de formation de ligands (LB), (LB) étant choisi dans le groupe formé par
- les phosphates ou les phosphonates fonctionnalisés sur les substituants organiques par hydroxy, amino ou amido,
- les composés thio fonctionnalisés choisis dans le groupe formé par les composés thiol, polythiol, acide thiocarboxylique, thioaldéhyde, thiocétone, dithiocarbamate, sulfonamide et/ou thioamide,
- les composés benzoylurée et/ou benzoylthio-urée,
- l'acide éthylènediaminetétraacétique (EDTA) ou la N,N-bis(3-diméthylaminopropyl)-N-isopropanolamine,
- les composés aminoquinoléine et/ou mercaptobenzimidazole,
- les composés hydroxy fonctionnalisés, qui présentent d'autres groupes imino en position 1,3,
- les composés acétylacétonate,
- les composés carbène fonctionnalisés et/ou
- l'alcool propargylique.

9. Laquages multicouches, comprenant
(1) au moins un premier laquage de base (A) en agent de revêtement selon les revendications 1 à 8,
(2) au moins un deuxième laquage de base, conférant une couleur et/ou un effet, en laque de base (B) et
(3) au moins un laquage transparent en laque claire (C).

10. Procédé pour la production de laquages multicouches, comprenant l'application successive de
(1) au moins un premier laquage de base (A) en agent de revêtement selon les revendications 1 à 8,
(2) au moins un deuxième laquage de base, conférant une couleur et/ou un effet, en laque de base (B) et
(3) au moins un laquage transparent en laque claire (C),
(i) sur un substrat non apprêté, ou
(ii) sur un substrat revêtu par un apprêt (G) non durci ou seulement partiellement durci, ou
(iii) sur un substrat revêtu par un apprêt (G) complètement durci.

11. Procédé selon la revendication 10, **caractérisé en ce qu'**un durcissement commun des couches humides résultantes de la laque de base (A), de la laque de base (B) et de la laque claire (C) ainsi que le cas échéant de l'apprêt (G) non durci ou seulement partiellement durci est réalisé.

12. Procédé selon l'une quelconque des revendications 10 ou 11, **caractérisé en ce que** la laque de base (B) contient le composant (a.3).

13. Procédé selon l'une quelconque des revendications 10 à 12, **caractérisé en ce que** l'apprêt (G) est constitué d'un laquage électrophorétique durci.

14. Procédé selon l'une quelconque des revendications 10 à 13, **caractérisé en ce que** la laque de base (A) et la laque de base (B) sont appliquées en une épaisseur de couche humide telle qu'on obtient, après le durcissement, une épaisseur de couche sèche commune de la laque de base (A) et de la laque de base (B) d'au total 10 à 50 µm.

15. Procédé selon l'une quelconque des revendications 10 à 14, **caractérisé en ce que** la laque de base (A) est appliquée en une épaisseur de couche humide telle qu'on obtient, après le durcissement, une épaisseur de couche sèche de la laque de base (A) de 6 à 25 µm.
